# EUROPEAN PATENT SPECIFICATION

(11) **EP 4 224 210 B1**
(45) Date of publication and mention of the grant of the patent: **31.12.2025**
(21) Application number: 21881654.4
(22) Date of filing: 06.08.2021
(51) Int. Cl.: G01S 13/87, G01S 7/00, G01S 7/48, H04B 10/11, G01S 13/89, G01S 17/87, G01S 17/89, G01S 13/931, H04B 10/112, H04B 10/114, G01S 13/06, G01S 13/66, G01S 17/06, G01S 17/66

(54) **DETECTION AND COMMUNICATION SYSTEM INCLUDING MULTIPLE RADARS**
DETEKTIONS- UND KOMMUNIKATIONSSYSTEM MIT MEHREREN RADARGERÄTEN
SYSTÈME DE DÉTECTION ET DE COMMUNICATION COMPRENANT PLUSIEURS RADARS

(30) Priority: 23.10.2020 CN 202011148826
(43) Date of publication of application: 09.08.2023
(73) Proprietor: Huawei Technologies Co., Ltd., Shenzhen, Guangdong 518129 (CN)
(72) Inventor: ZHANG, Bo, Shenzhen, Guangdong 518129 (CN); ZENG, Li, Shenzhen, Guangdong 518129 (CN); XIAO, Xinhua, Shenzhen, Guangdong 518129 (CN); WU, Yuping, Shenzhen, Guangdong 518129 (CN); GAO, Hongbiao, Shenzhen, Guangdong 518129 (CN)
(74) Representative: Epping - Hermann - Fischer
(86) International application number: PCT/CN2021/111326
(87) International publication number: WO 2022/083235

(56) References cited:
- WO-A1-2017/205874
- CN-A- 105 738 913
- CN-A- 106 125 081
- CN-A- 106 324 607
- CN-A- 109 752 713
- CN-A- 110 109 129
- CN-A- 111 208 507

## Description

### TECHNICAL FIELD

This application relates to the field of detection and communication technologies, and in particular, to a detection and communication system, a control apparatus, and a detection system.

### BACKGROUND

As an increasingly high requirement is imposed on high-bandwidth communication, conventional microwave communication cannot meet a bandwidth requirement. Space optics communication may meet a high-bandwidth requirement, and space optics communication is a communication technology that uses a light wave as a carrier to transmit information in vacuum or atmosphere. Compared with a conventional microwave, a frequency of the light wave is three to five orders of magnitude higher than the microwave, and a data transmission bit rate can reach 10G+bps or even hundreds of G+bps. In addition, an antenna gain in space optics communication is greatly improved (60 dBi to 90 dBi) compared with a microwave antenna. Therefore, high-speed communication can be implemented by using a low transmit power.

However, a light spot of a light beam in space optics communication is very small. Therefore, before communication, a target needs to be aligned. When the target moves, movement of the target needs to be sensed in a timely manner, and a pointing direction of light needs to be adjusted again, to ensure communication stability. At present, a communication link is established in a manner of acquisition, tracking, and pointing (, ATP) in space optics communication, but it takes long time. Consequently, a connection cannot be quickly established, and especially when the target moves, the target cannot be quickly aligned. To quickly align with the target, a multi-point positioning technology is proposed, such as satellite positioning, mobile base station positioning, and Bluetooth positioning. However, precision of satellite positioning, mobile base station positioning, and Bluetooth positioning in a conventional technology is low.

In conclusion, in a solution for aligning with the target in the conventional technology, alignment requires long time, or alignment precision is low.

WO2017205874A1 discloses a radar system for tracking UAVs and other low flying objects utilizing wireless networking equipment. The system is implemented as a distributed low altitude radar system where transmitting antennas are coupled with the wireless networking equipment to radiate signals in a skyward direction. A receiving antenna or array receives signals radiated from the transmitting antenna, and in particular, signals or echoes reflected from the object in the skyward detection region. One or more processing components is electronically coupled with the wireless networking equipment and receiving antenna to receive and manipulate signal information to provide recognition of and track low flying objects and their movement within the coverage region. The system may provide detection of objects throughout a plurality of regions by networking regional nodes, and aggregating the information to detect and track UAVs and other low flying objects as they move within the detection regions.

### SUMMARY

This application provides a detection and communication system to improve precision of alignment between a radar and a target.

According to a first aspect, this application provides a detection and communication system, where the detection and communication system includes N radars, and the N radars may be separately configured to: search for a target, and separately align with the target, where N is an integer greater than 1, a first radar is configured to communicate with the target, a second radar is configured to track and point the target, the first radar is K radars that are in the N radars and that align with the target, the second radar is a radar other than the first radar in the N radars, and K is a positive integer less than N.

According to this solution, in the detection and communication system, the N radars separately align with the target, to help improve precision of alignment between the radar and the target. In addition, the K radars that align with the target communicate with the target, especially when a plurality of radars communicate with the target, to help improve stability and reliability of communication between the radar and the target.

In a possible implementation, coverage regions of electromagnetic waves transmitted by the N radars overlap. For example, the N radars are not on a same line.

In the foregoing solution, all the N radars can find the target. When the N radars are not on a same line, the electromagnetic waves transmitted by the N radars can cover a large region, and a distance between the N radars needs to ensure, as much as possible, that the electromagnetic waves transmitted by the radars do not interfere with each other.

In a possible implementation, a radar that is in the N radars and that finds the target may be configured to feed back first information to a control apparatus, and the first information indicates a first distance between the target and the radar that finds the target; and a radar that is in the N radars and that does not find the target may be configured to: receive a first instruction from the control apparatus, and perform, based on the first instruction, searching in a region in which the target is located.

Correspondingly, the control apparatus is further configured to: receive the first information from the radar that finds the target, determine, based on the first information, the region in which the target is located, generate the first instruction based on the region in which the target is located, and send the first instruction to the radar that does not find the target.

In the foregoing solution, the N radars cooperate with the control apparatus to search for the target by the N radars, so that the radar can quickly find the target. This helps reduce time for searching for the target by the radar, and further helps reduce time for aligning with the target by the radar.

The following provides three possible cases as an example, so that the N radars cooperate with the control apparatus to search for the target by the N radars.

Case 1. The control apparatus finds the target based on distance information fed back by the radar.

Based on Case 1, there may be the following three possible cases.

Case 1.1. One radar finds the target.

In a possible implementation, if one radar finds the target, the first instruction is used to instruct the radar that does not find the target to perform searching on a spherical surface whose sphere center is the radar that finds the target and whose radius is the first distance.

In other words, the target is on the spherical surface whose sphere center is the radar that finds the target and whose radius is the first distance.

Case 1.2. Two radars find the target.

In a possible implementation, if two radars find the target, the first instruction is used to instruct the radar that does not find the target to perform searching on a junction line of spherical surfaces corresponding to the two radars that find the target, where the spherical surface corresponding to the radar that finds the target is a spherical surface whose sphere center is the radar that finds the target and whose radius is the first distance.

In other words, the target is on the junction line of the spherical surfaces corresponding to the two radars that find the target.

Case 1.3. Three radars find the target.

In a possible implementation, if at least three radars find the target, the first instruction is used to instruct the radar that does not find the target to perform searching at an intersection point of spherical surfaces corresponding to the at least three radars that find the target, where the spherical surface corresponding to the radar that finds the target is a spherical surface whose sphere center is the radar that finds the target and whose radius is the first distance.

In other words, the target is at the intersection point of the spherical surfaces corresponding to the at least three radars that find the target.

Case 2. The control apparatus determines, based on point cloud data sent by the radar, the region in which the target is located.

In a possible implementation, the N radars are separately configured to: receive an echo signal reflected from a detection region; determine, based on the received echo signal, point cloud data corresponding to the detection region; and feed back third information to a control apparatus, where the third information includes the corresponding point cloud data. Correspondingly, the control apparatus may be further configured to: receive the point cloud data from the N radars; determine, based on the received point cloud data, the region in which the target is located; and separately send a fourth instruction to the N radars, where the fourth instruction is used to indicate the region in which the target is located.

Further, optionally, the control apparatus may separately send a fourth instruction to the N radars, where the fourth instruction is used to indicate the region in which the target is located. Correspondingly, the N radars are further configured to: separately receive the fourth instruction from the control apparatus, where the fourth instruction is used to indicate the region in which the target is located; and perform, based on the fourth instruction, searching in the region in which the target is located.

Based on the foregoing two cases, the N radars cooperate with the control apparatus to search for the target, so that the radar can quickly align with the target.

In a possible implementation, each of the N radars corresponds to one feedback control component; and the feedback control component is configured to: receive fourth information from the radar that finds the target, where the fourth information indicates a location relationship between the target and a central region of an electromagnetic wave transmitted by the radar that finds the target; and generate a control instruction based on the fourth information, where the control instruction is used to instruct the central region of the electromagnetic wave transmitted by the radar that finds the target to align with the target.

In this solution, the feedback control component may accurately control the central region (which is generally a region with strongest strength) of radar transmission to align with the target, to precisely track the target.

In a possible implementation, the target may move. After the target moves, the second radar may be further configured to send second information to the control apparatus, where the second information indicates a location of the target after movement.

In a possible implementation, the control apparatus is further configured to: receive the second information from the second radar, where the second information indicates the location of the target after movement; determine, based on the second information, a pointing direction that is of the first radar and that exists when the first radar aligns with the moved target; and generate a third instruction based on the pointing direction that is of the first radar and that exists when the first radar aligns with the moved target, and send the third instruction to the first radar.

In this solution, the second radar may track the target in real time, and feed back information to the control apparatus. The control apparatus may control the first radar to quickly align with the target whose location is moved. This helps further improve stability and reliability of communication with the target.

In a possible implementation, if N is an integer greater than 2, and N-K is an integer greater than or equal to 2, the control apparatus is further configured to: determine a radar that does not align with the target exists in the K first radars, and send a second instruction to M radars in the N-K second radars, where the second instruction is used to instruct the M radars to communicate with the target, and M is a positive integer less than N-K.

In a possible implementation, if N is an integer greater than 2, and N-K is an integer greater than or equal to 2, the M radars in the N-K second radars may be further configured to: receive the second instruction from the control apparatus, and communicate with the target based on the second instruction, where the second instruction is sent when a radar that does not align with the moved target exists in the K first radars, and M is an integer less than N-K.

In this solution, if a radar that does not align with the target exists in the K first radars after the location of the target is moved, some of the second radars that align with the target may quickly switch to communicate with the target. This helps further improve stability and reliability of communication with the target.

In a possible implementation, the first radar may be configured to communicate with the target, and may also be configured to track and point the target. The following provides two possible implementations as an example. Implementation 1. Modulation is performed by using a communication code and a ranging code.

In a possible implementation, the first radar is further configured to: transmit, to the target in a first time domain, a first electromagnetic wave that carries communication information, and transmit a second electromagnetic wave to the target in a second time domain, where the second electromagnetic wave is used to determine a first distance between the first radar and the target; and the second radar is further configured to transmit a third electromagnetic wave to the target, where the third electromagnetic wave is used to determine a first distance between the second radar and the target. Optionally, the first time domain and the second time domain are alternately arranged. Further, optionally, the first time domain and the second time domain are alternately arranged, and form consecutive time domains.

For example, the first radar may be specifically configured to: in the first time domain, encode the communication information to obtain a communication code, and modulate the communication code onto a to-be-transmitted electromagnetic wave to obtain the first electromagnetic wave; and in the second time domain, modulate a ranging code onto a to-be-transmitted electromagnetic wave to obtain the second electromagnetic wave.

Implementation 2. amplitude modulationis performed.

In a possible implementation, the first radar may be further configured to: encode communication information to obtain a communication code; combine the communication code and a ranging code, and modulate the combined communication code and ranging code onto a to-be-transmitted electromagnetic wave to obtain a fourth electromagnetic wave; and transmit the fourth electromagnetic wave to the target. It should be understood that the fourth electromagnetic wave carries the communication information, and may be further used to determine the first distance between the first radar and the target.

In a possible implementation, the first radar further includes a first detector, where the first detector is configured to: receive a second echo signal from the target, and determine the first distance between the first radar and the target based on the second echo signal, where the second echo signal is obtained by reflecting the second electromagnetic wave by the target; and the second radar further includes a second detector, where the second detector is configured to: receive a third echo signal from the target, and determine the first distance between the second radar and the target based on the third echo signal, where the third echo signal is obtained by reflecting the third electromagnetic wave by the target.

The first distance between the first radar and the target may be determined by using the first detector in this solution, and the first distance between the second radar and the target may be determined by using the second detector.

In a possible implementation, the detection and communication system may further include the target, and the target includes a lens component, a reflection component, and a third detector, where the lens component is configured to converge the received first electromagnetic wave to the third detector; the third detector is configured to demodulate the received first electromagnetic wave to obtain the communication information; and the reflection component is configured to: reflect the second electromagnetic wave to obtain the second echo signal, and reflect the third electromagnetic wave to obtain the third echo signal.

In a possible implementation, the lens component is a hemisphere lens, and the reflection component is fastened on a cross section of the hemisphere.

In this solution, the hemisphere lens may converge the first electromagnetic wave to the third detector as much as possible. This helps further improve stability and reliability of communication between the target and the radar. The reflection component may reflect an echo signal as much as possible. This helps improve precision of the determined first distance.

Further, optionally, the reflection component is a pyramid.

According to a second aspect, as an example useful for understanding the invention, this application provides a detection and communication system, where the detection and communication system includes N radars and a control apparatus, the control apparatus is configured to control the N radars to separately search for a target, and the N radars are configured to separately align with the target, where N is an integer greater than 1, a first radar is configured to communicate with the target, a second radar is configured to track and point the target, the first radar is K radars that are in the N radars and that align with the target, the second radar is a radar other than the first radar in the N radars, and K is a positive integer less than N.

In this solution, the N radars cooperate with the control apparatus to search for the target by the N radars, so that the radar can quickly align with the target. This helps reduce time for finding the target by the N radars. In addition, the N radars separately align with the target, to help improve precision of alignment between the radar and the target. Further, the K radars in the detection and communication system may communicate with the target. When more than one radar communicates with the target, this helps improve stability and reliability of communication between the radar and the target.

For a possible implementation of the second aspect, refer to the descriptions of any possible method in the first aspect. Details are not described herein again.

According to a third aspect, as an example useful for understanding the invention, this application provides a detection system, including N radars, where the N radars are configured to: separately search for a target, and separately align with the target, N is an integer greater than 1, a radar that is in the N radars and that finds the target is configured to feed back first information to a control apparatus, the first information indicates a first distance between the target and the radar that finds the target, and a radar that is in the N radars and that does not find the target is configured to: receive a first instruction from the control apparatus, and perform, based on the first instruction, searching in a region in which the target is located. According to this solution, the N radars separately align with the target, to help improve precision of alignment between the radar and the target.

In a possible implementation, the detection system further includes the control apparatus, and the control apparatus is configured to: receive the first information from the radar that finds the target; determine, based on the first information, the region in which the target is located; and generate the first instruction based on the region in which the target is located, and send the first instruction to the radar that does not find the target, so that the radar that does not find the target performs, based on the first instruction, searching in the region in which the target is located.

In the foregoing solution, the N radars cooperate with the control apparatus to search for the target by the N radars, so that the radar can quickly find the target. This helps reduce time for searching for the target by the radar, and further helps improve efficiency of alignment between the radar and the target.

In a possible implementation, each of the N radars corresponds to one feedback control component; and the feedback control component may be configured to: receive second information from the radar that finds the target, where the second information indicates a location relationship between the target and a central region of an electromagnetic wave transmitted by the radar that finds the target (for example, a distance between the central region of the electromagnetic wave and the target is indicated by using strength information of the electromagnetic wave), and generate a control instruction based on the second information, where the control instruction is used to instruct the central region of the electromagnetic wave transmitted by the radar that finds the target to align with the target. Further, optionally, the feedback control component may send the control instruction to the radar that finds the target. Correspondingly, the radar that finds the target adjusts, based on the received control instruction, the central region of the transmitted electromagnetic wave to align with the target.

In a possible implementation, a first radar in the N radars is configured to communicate with the target, a second radar is configured to track and point the target, the first radar is K radars that are in the N radars and that align with the target, the second radar is a radar other than the first radar in the N radars, and K is a positive integer less than N. According to a fourth aspect, as an example useful for understanding the invention, this application provides a control method. The method includes: receiving first information from a radar that finds a target, where the first information indicates a first distance between the target and the radar that finds the target; determining, based on the first information, a region in which the target is located, and generating a first instruction based on the region in which the target is located; and sending the first instruction to a radar that does not find the target, where the first instruction is used to instruct the radar that does not find the target to perform searching in the region in which the target is located, and N is an integer greater than 1.

In this solution, the N radars cooperate with the control apparatus to search for the target by the N radars, so that the radar can quickly align with the target. This helps reduce time for finding the target by the N radars. In addition, the N radars separately align with the target, to help improve precision of alignment between the radar and the target. Further, the K radars in the detection and communication system may communicate with the target. When more than one radar communicates with the target, this helps improve stability and reliability of communication between the radar and the target.

In a possible implementation, it is determined that a radar that does not align with the moved target exists in K first radars, where the first radar is K radars that are in N radars and that align with the target, N is an integer greater than 2, and N-K is an integer greater than or equal to 2; and a second instruction is transmitted to M radars in N-K second radars, where the second instruction is used to instruct the M radars to communicate with the target, the second radar is a radar other than the first radar in the N radars, and M is an integer less than N-K.

In a possible implementation, second information is received from the second radar, where the second information indicates a location of the target after movement; a pointing direction that is of the first radar and that exists when the first radar aligns with the moved target is determined based on the second information; a third instruction is generated based on the pointing direction that is of the first radar and that exists when the first radar aligns with the moved target; and the third instruction is sent to the first radar.

According to a fifth aspect, as an example useful for understanding the invention, this application provides a control apparatus. The control apparatus includes a processing module, a receiving module, and a sending module. The receiving module is configured to receive first information from a radar that finds a target, where the first information indicates a first distance between the target and the radar that finds the target. The processing module is configured to: determine, based on the first information, a region in which the target is located, and generate a first instruction based on the region in which the target is located. The sending module is further configured to send the first instruction to a radar that does not find the target, where the first instruction is used to instruct the radar that does not find the target to perform searching in the region in which the target is located.

In a possible implementation, the processing module is further configured to determine that a radar that does not align with the moved target exists in a first radar, where the first radar is K radars that are in N radars and that align with the target, N is an integer greater than 2, and N-K is an integer greater than or equal to 2. The sending module is further configured to transmit a second instruction to M radars in N-K second radars, where the second instruction is used to instruct the M radars to communicate with the target, the second radar is a radar other than the first radar in the N radars, and M is an integer less than N-K.

In a possible implementation, the receiving module is further configured to receive second information from the second radar, where the second information indicates a location of the target after movement. The processing module is further configured to: determine, based on the second information, a pointing direction that is of the first radar and that exists when the first radar aligns with the moved target, and generate a third instruction based on the pointing direction that is of the first radar and that exists when the first radar aligns with the moved target. The sending module is further configured to send the third instruction to the first radar.

According to a sixth aspect, as an example useful for understanding the invention, this application provides a control apparatus. The control apparatus includes a processor, a receiver, and a transmitter. The receiver is configured to receive first information from a radar that finds a target, where the first information indicates a first distance between the target and the radar that finds the target. The processor is configured to: determine, based on the first information, a region in which the target is located, and generate a first instruction based on the region in which the target is located. The transmitter is further configured to send the first instruction to a radar that does not find the target, where the first instruction is used to instruct the radar that does not find the target to perform searching in the region in which the target is located.

In a possible implementation, the processor is further configured to determine that a radar that does not align with the moved target exists in a first radar, where the first radar is K radars that are in N radars and that align with the target, N is an integer greater than 2, and N-K is an integer greater than or equal to 2. The transmitter is further configured to transmit a second instruction to M radars in N-K second radars, where the second instruction is used to instruct the M radars to communicate with the target, the second radar is a radar other than the first radar in the N radars, and M is an integer less than N-K.

In a possible implementation, the receiver is further configured to receive second information from the second radar, where the second information indicates a location of the target after movement. The processor is further configured to: determine, based on the second information, a pointing direction that is of the first radar and that exists when the first radar aligns with the moved target, and generate a third instruction based on the pointing direction that is of the first radar and that exists when the first radar aligns with the moved target. The transmitter is further configured to send the third instruction to the first radar.

For technical effects that can be achieved in either of the fifth aspect and the sixth aspect, refer to the descriptions of the beneficial effects in the fourth aspect. Details are not described herein again.

According to a seventh aspect, as an example useful for understanding the invention, this application provides a computer-readable storage medium. The computer-readable storage medium stores a computer program or instructions. When the computer program or the instructions is or are executed by a control apparatus, the control apparatus is enabled to perform the method in any one of the fourth aspect or the possible implementations of the fourth aspect. According to an eighth aspect, as an example useful for understanding the invention, this application provides a computer program product. The computer program product includes a computer program or instructions. When the computer program or the instructions is or are executed by a control apparatus, the control apparatus is enabled to perform the method in any one of the fourth aspect or the possible implementations of the fourth aspect.

### BRIEF DESCRIPTION OF DRAWINGS

FIG. 1a is a schematic diagram of a principle of detecting a target by a laser radar according to this application;
FIG. 1b is a schematic diagram of a possible application scenario according to this application;
FIG. 1c is a schematic diagram of another possible application scenario according to this application;
FIG. 1d is a schematic diagram of another possible application scenario according to this application;
FIG. 1e is a schematic diagram of a vehicle-road synergy scenario according to this application;
FIG. 1f is a schematic diagram of an AGV scenario according to this application;
FIG. 1g is a schematic diagram of remote interaction and real scenario reproduction according to this application;
FIG. 1h is a schematic diagram of remote interaction and a virtual scenario according to this application;
FIG. 2 is a schematic diagram of an architecture of a detection and communication system according to this application;
FIG. 3a is a schematic diagram of coverage regions of electromagnetic waves transmitted by N laser radars according to this application;
FIG. 3b is a schematic diagram of a location relationship between N laser radars according to this application;
FIG. 3c is a schematic diagram of a relationship between a quantity of laser radars and a scanning region according to this application;
FIG. 4a to FIG. 4c are schematic flowcharts of a method for finding a target through cooperation between a laser radar and a control apparatus according to this application;
FIG. 5a and FIG. 5b are schematic diagrams of one-to-one communication between a laser radar and a target according to this application;
FIG. 5c and FIG. 5d are schematic diagrams of many-to-one communication between laser radars and a target according to this application;
FIG. 6 is a schematic diagram of a relationship between a first time domain and a second time domain according to this application;
FIG. 7 is a schematic diagram of a amplitude modulation process according to this application;
FIG. 8a is a schematic diagram of a structure of a target according to this application;
FIG. 8b is a schematic diagram of a structure of a target according to this application;
FIG. 8c is a schematic diagram of a structure of a target according to this application;
FIG. 9 is a schematic diagram of a structure of a reflection component according to this application;
FIG. 10 is a schematic diagram in which pyramids are arranged and are fastened on a cross section of a hemisphere of a hemisphere lens according to this application;
FIG. 11a is a schematic diagram of a structure of a first detector according to this application;
FIG. 11b is a schematic diagram of a process of precise alignment between a laser radar and a target according to this application;
FIG. 12a is a schematic diagram of a structure of another detection and communication system according to this application;
FIG. 12b is a schematic diagram of a structure of another detection and communication system according to this application;
FIG. 13a is a schematic flowchart of a detection method according to this application;
FIG. 13b is a schematic flowchart of a detection and communication method according to this application;
FIG. 13c is a schematic flowchart of another detection and communication method according to this application;
FIG. 13d is a schematic flowchart of another detection method according to this application;
FIG. 14 is a schematic flowchart of another detection and communication method according to this application;
FIG. 15 is a schematic flowchart of a control method according to this application;
FIG. 16 is a schematic flowchart of still another detection and communication method according to this application;
FIG. 17 is a schematic flowchart of still another detection method according to this application;
FIG. 18 is a schematic diagram of a structure of a control apparatus according to this application; and
FIG. 19 is a schematic diagram of a structure of a control apparatus according to this application.

### DESCRIPTION OF EMBODIMENTS

The invention is defined in the claims and is directed to a detection and communication system. Embodiments not referring to the detection and communication system are not presented as embodiments of the invention, but as examples useful for understanding the invention.

The following describes in detail embodiments of this application with reference to accompanying drawings.

The following describes some terms in this application. It should be noted that these explanations are intended to facilitate understanding of a person skilled in the art, but do not constitute a limitation on the protection scope claimed in this application.

### 1. Space optics communication

Free space optics communication (FSO) is a communication technology that uses a light wave as a carrier to transmit information in vacuum or atmosphere.

### 2. Ranging code

The ranging code is a binary code sequence that can be used to measure a distance between a target and a radar, and is a pseudo random noise code. For a binary code sequence, if each bit is randomly generated, the binary code sequence is referred to as a random noise code. The random noise code has good autocorrelation and cross-correlation characteristics, and the characteristics are required by the ranging code. Because each bit of the random noise code is randomly generated, two groups of random noise codes with a totally same structure cannot be generated independently in the target and the radar. However, this is a condition for ranging. Therefore, a pseudo random noise code is generated. The pseudo random noise code has autocorrelation and cross-correlation characteristics similar to the random noise code. The pseudo random noise code is a binary code sequence that is generated by a code generator and that is arranged according to a rule. Two groups of ranging codes with a totally same structure can be generated in the target and the radar by using a same method.

### 3. Communication code

The communication code is obtained after information is encoded. Encoding is a process of converting information from one form or format into another form. A pre-defined method may be used to convert text, a digit, and another object into a digit, or to convert information and data into a required electrical pulse signal. Decoding is an inverse process of encoding.

### 4. Pointing direction of a radar

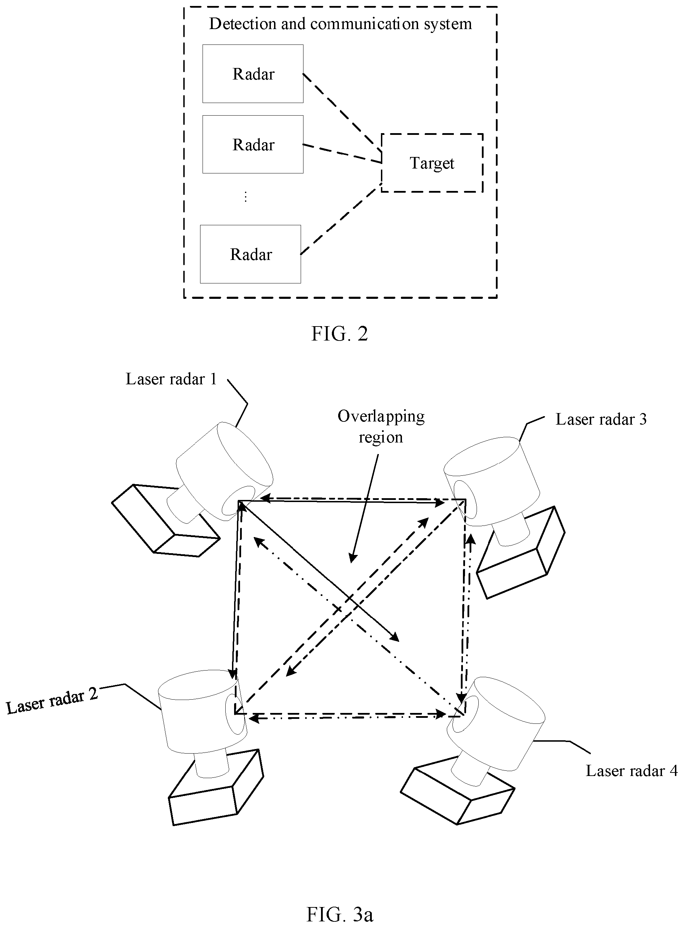

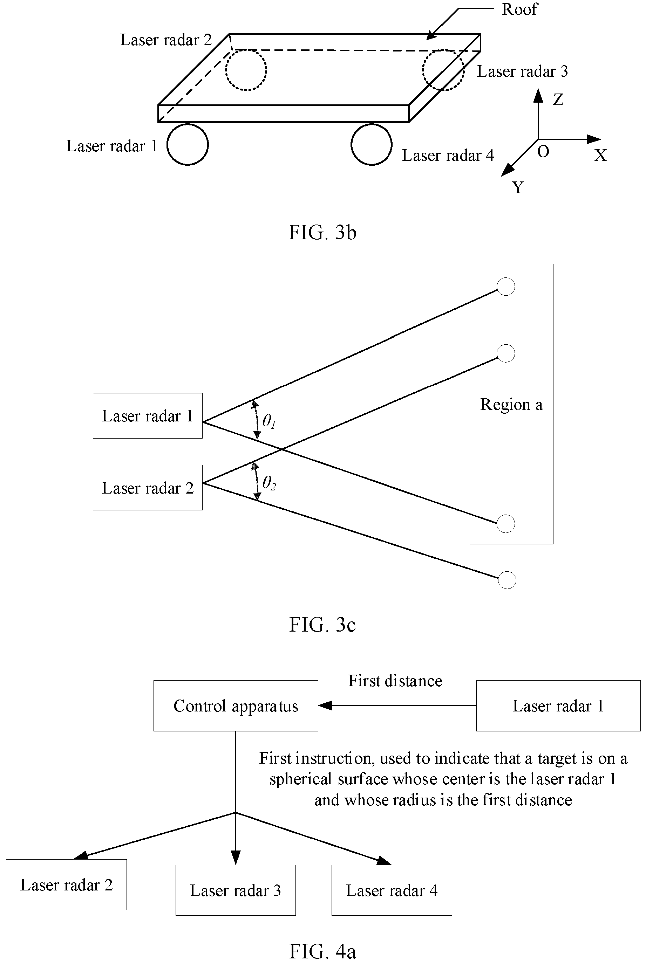

The pointing direction of the radar is a pointing direction of an electromagnetic wave transmitted by the radar, is specifically a pointing direction of the center of the electromagnetic wave transmitted by the radar, and generally may be briefly referred to as the pointing direction of the radar. With reference to the following FIG. 3b, a location of the radar may be represented by (xᵢ, yᵢ, zᵢ), and the pointing direction of the radar may be represented by (αᵢ, βᵢ), where αᵢ represents an azimuth between the X-axis and a projection line of a pointing direction of an electromagnetic wave transmitted by an i^{th} radar on an XOY plane, and βᵢ represents an angle between the Z-axis and the pointing direction of the electromagnetic wave transmitted by the i^{th} radar.

### 5. Region of interest (ROI)

In machine vision and image processing, a region that needs to be processed and that is drawn from a processed image in a manner such as a box, a circle, an ellipse, or an irregular polygon is referred to as a region of interest.

The foregoing describes some terms in this application. The following describes technical features and possible application scenarios in this application. It should be noted that these explanations are intended to facilitate understanding of a person skilled in the art, but do not constitute a limitation on the protection scope claimed in this application.

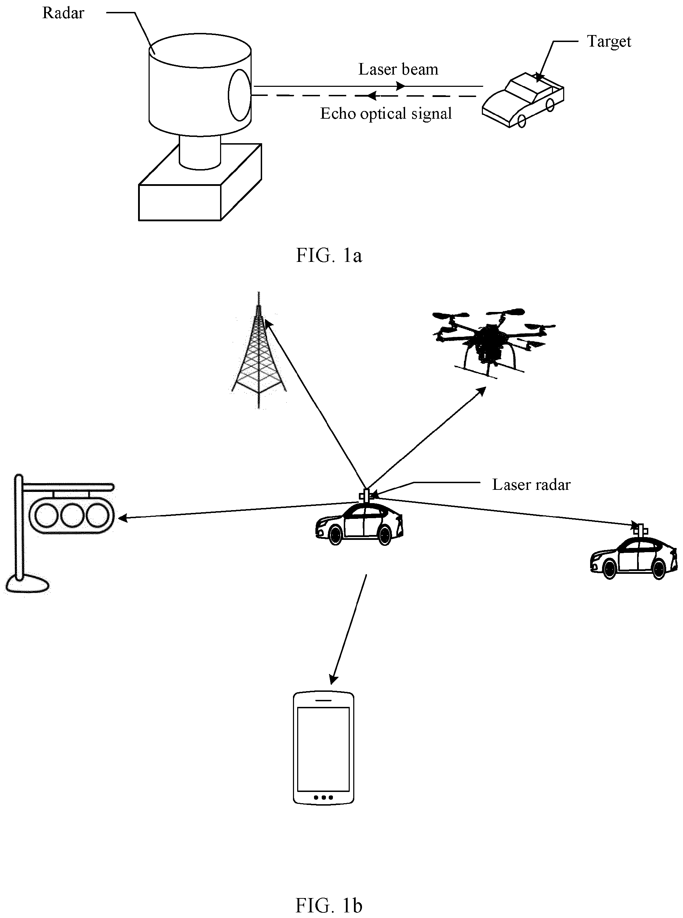

A radar usually works by transmitting a high-frequency electromagnetic wave and receiving electromagnetic energy reflected by a target. A received echo signal and the transmitted electromagnetic wave are analyzed through comparison, so that information related to the target can be obtained, for example, a distance between the radar and the target and a movement speed of the target. FIG. 1a is a schematic diagram of a principle of detecting a target by a radar according to this application. The radar may include a laser and a detector. The laser may be configured to transmit an electromagnetic wave. A target exists within a specific distance in a transmission direction of the electromagnetic wave. The electromagnetic wave may be reflected by a surface of the target, and the reflected signal is referred to as an echo signal. The echo signal is returned to the detector of the radar. The detector may be configured to determine a distance between the radar and the target, a movement speed of the target, and the like based on the received echo signal and the transmitted laser beam.

The radar in this application may be a laser radar, a microwave radar, or a millimeter-wave radar. In the following descriptions, the laser radar is used as an example. It should be noted that an electromagnetic wave transmitted by the laser radar is referred to as a laser beam, an electromagnetic wave transmitted by the microwave radar is referred to as a microwave, and a laser beam transmitted by the millimeter-wave radar is referred to as a millimeter wave. In other words, the laser radar below may be replaced with the millimeter-wave radar, and the electromagnetic wave may be replaced with the millimeter wave; or the laser radar below may be replaced with the microwave radar, and the electromagnetic wave may be replaced with the microwave.

The following provides, as an example, a possible scenario to which this application may be applied.

FIG. 1b is a schematic diagram of a possible application scenario according to this application. In this scenario, a laser radar may be mounted on a mobile device. For example, the laser radar may be mounted on a motor vehicle (for example, a driver-less car, a smart vehicle, an electric vehicle, or a digital vehicle) and used as a vehicle-mounted laser radar. For another example, the laser radar may be mounted on an unmanned aerial vehicle and used as an airborne laser radar.

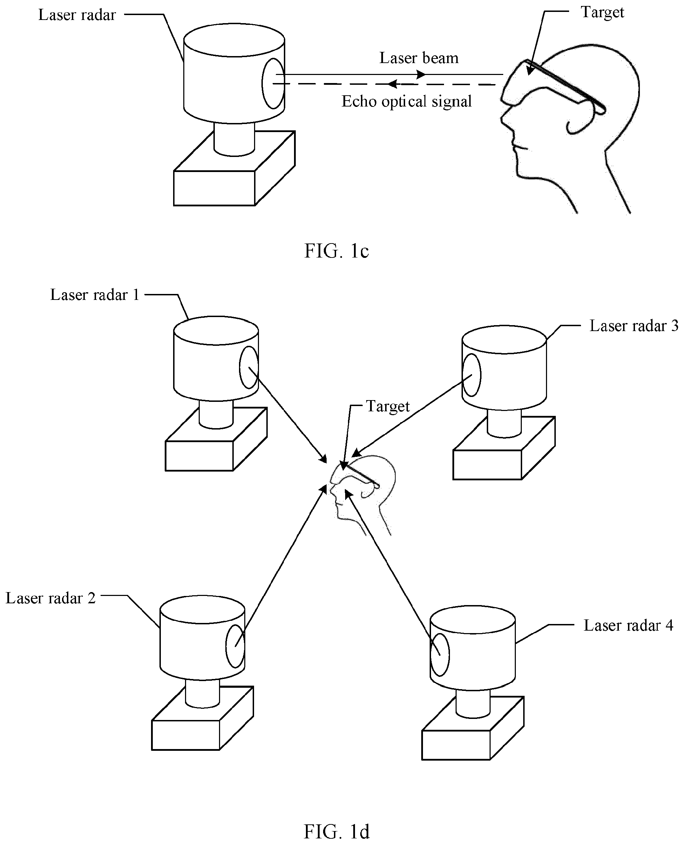

FIG. 1c shows another possible application scenario according to this application. In this scenario, a laser radar may also be mounted on a fixed platform. For example, the laser radar may be mounted on a roadside unit ( RSU), a roof, a base station, or the like. In a scenario in which the laser radar is mounted on the fixed platform, the laser radar requires assistance of another apparatus on the fixed platform to determine a current location and steering information of the laser radar. This can ensure availability of measurement data. For example, the fixed platform may further include a global positioning system (GPS) apparatus and an inertia measurement unit (IMU) apparatus. The laser radar may obtain characteristic parameters such as a location and a speed of a target by combining measurement data of the GPS apparatus and the IMU apparatus. For example, the laser radar may provide geographical location information of the fixed platform by using the GPS apparatus in the fixed platform, and record a posture and steering information of the fixed platform by using the IMU apparatus. Then, after a distance between the radar and the target is determined based on an echo signal and a transmitted laser beam, a measurement point of the target may be converted from a relative coordinate system to a location point in an absolute coordinate system by using at least one of the geographical location information provided by the GPS apparatus or the posture and the steering information that are provided by the IMU apparatus, to obtain geographical location information of the target, so that the laser radar can be applied to the fixed platform.

It should be noted that a quantity of laser radars included in each scenario and a quantity of targets included in each scenario are not limited in this application. For example, the scenario may include a plurality of laser radars mounted on the fixed platform and a movable target. Referring to FIG. 1d, four laser radars mounted on the fixed platform and one movable target are used as an example. The movable target is described by using a display apparatus (for example, a virtual reality (VR) helmet, VR glasses, an augmented reality (AR) helmet, or AR glasses) worn by a user.

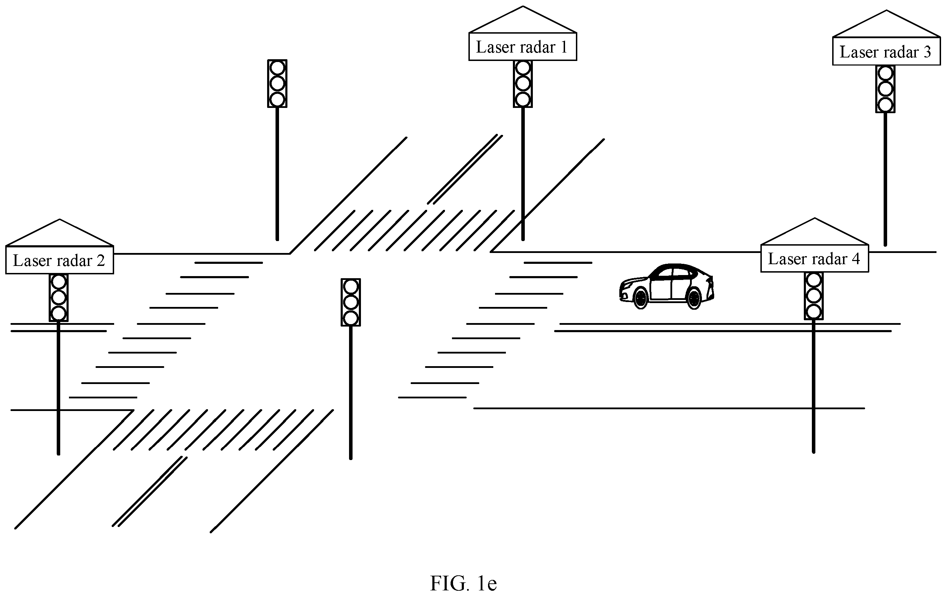

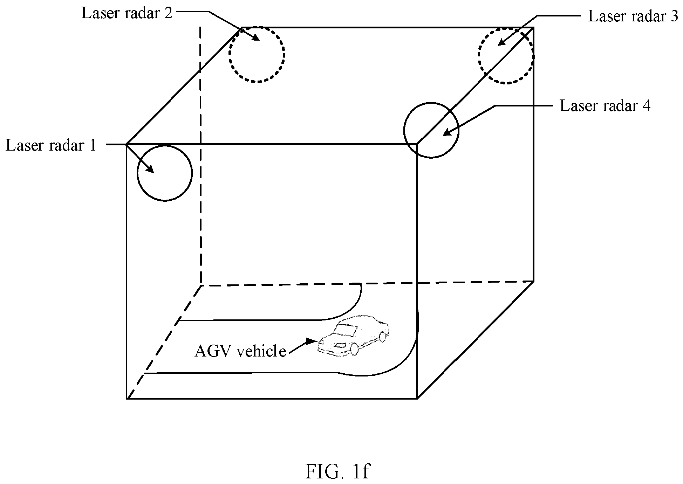

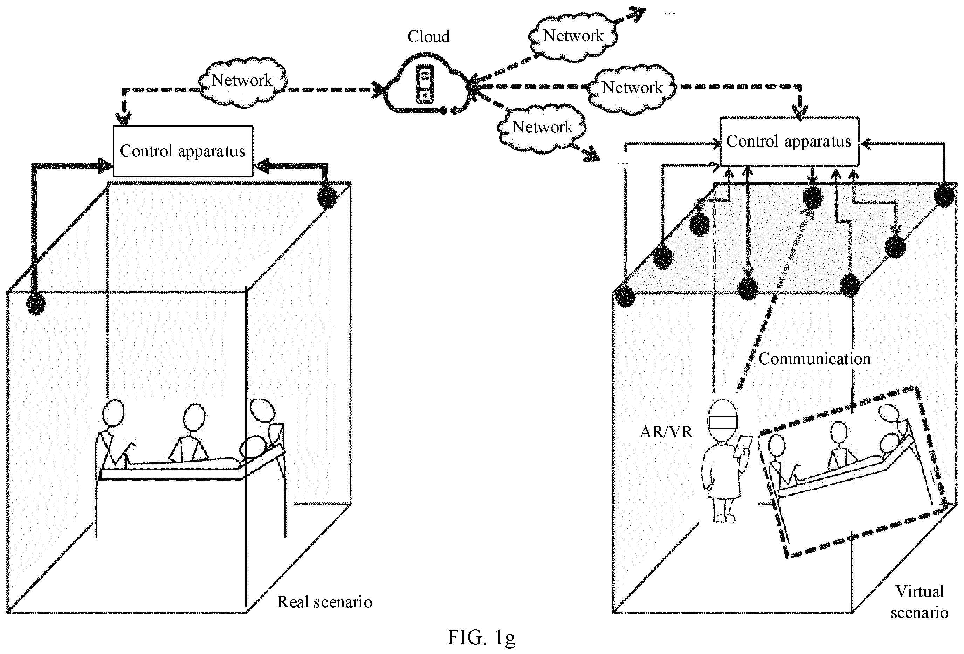

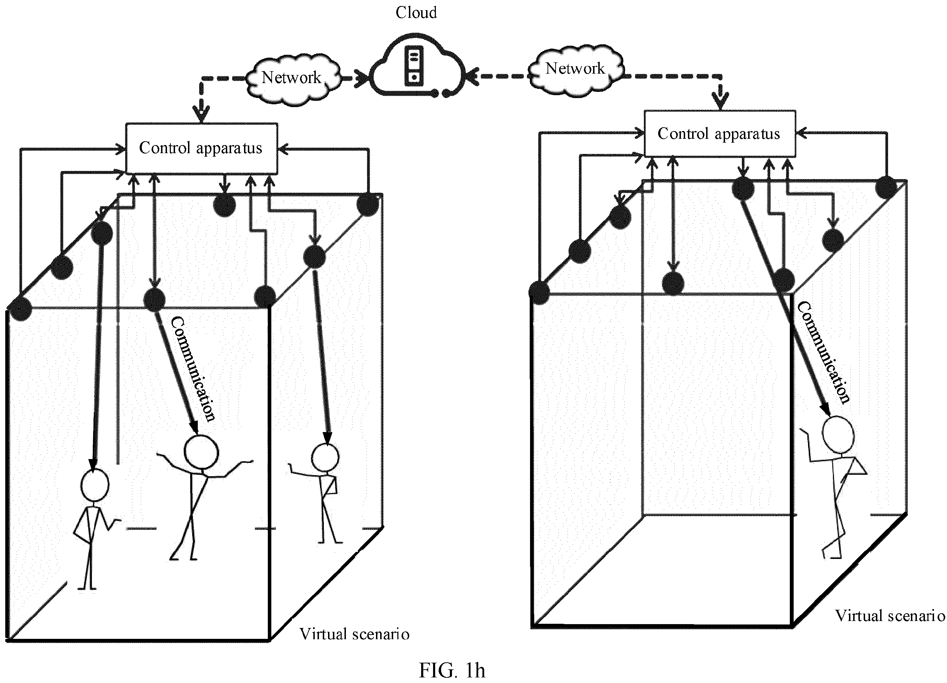

This application may be further applied to another possible scenario. For example, this application may be applied to a vehicle-road synergy (or referred to as an intelligent vehicle infrastructure cooperative system) scenario shown in FIG. 1e. For another example, this application may be applied to an automatic guided vehicle (AGV) scenario shown in FIG. 1f. The AGV is a transport vehicle that is equipped with an automatic navigation apparatus such as an electromagnetic or optical apparatus, that can travel along a specified navigation path, and that has safety protection and various transport functions. For another example, this application may be applied to remote interaction and real scenario reproduction shown in FIG. 1g, and the scenario may be, for example, telemedicine or remote training. For another example, this application may be applied to remote interaction and a virtual scenario shown in FIG. 1h, and the scenario may be, for example, game interaction (for example, a plurality of people play a game together, perform training, or participate in another activity in the virtual scenario) or dangerous scenario training. For another example, this application may be applied to a scenario such as facial recognition. The examples are not enumerated herein. As described in the background, in a solution for aligning with a target in a conventional technology, alignment requires long time, or alignment precision is low.

In view of this, this application provides a detection and communication system. In the detection and communication system, N laser radars separately align with a target, so that precision of alignment with the target can be improved, and communication between the radar and the target can be implemented.

With reference to FIG. 2 to FIG. 12b, the following specifically describes the detection and communication system provided in this application.

FIG. 2 is a schematic diagram of an architecture of a detection and communication system according to this application. The detection and communication system may include N radars, where N is an integer greater than 1. The N radars may be configured to: separately search for a target, and separately align with a target. K radars (referred to as first radars) that are in the N radars and that align with the target are configured to communicate with the target, a second radar is configured to track and point the target, the second radar is a radar other than the first radar in the N radars, and K is a positive integer less than N.

In a possible implementation, the following case may exist: After all the K radars align with the target, the K radars communicate with the target, or after all the N radars align with the target, the K radars thereof communicate with the target, or after one of the N radars aligns with the target, the radar that aligns with the target starts to communicate with the target, a radar that does not align with the target continues to align with the target, and when another radar that aligns with the target exists, the radar that newly aligns with the target communicates with the target, and so on, until the K radars align with the target, where the K radars are configured to communicate with the target.

It should be noted that, in addition to communicating with the target, the first radar is further configured to track and point the target. That is, the first radar is configured to communicate with the target, and is also configured to track and point the target.

According to this solution, in the detection and communication system, the N radars separately align with the target, to help improve precision of alignment between the radar and the target. In addition, the K radars that align with the target communicate with the target, especially when K is greater than 1, to help improve stability and reliability of communication between the radar and the target.

Further, when the radar is a laser radar, optics communication is performed between the laser radar and the target, and optics communication may implement high-bit-rate and high-bandwidth transmission, to implement very-high-speed interconnection between the laser radar and the target.

The following describes the N radars in detail, to provide an example implementation solution. In the following descriptions, the radar is described by using the laser radar as an example.

In a possible implementation, coverage regions of laser beams transmitted by the N laser radars overlap. Referring to FIG. 3a, a shadow region is an overlapping region of coverage regions of laser beams separately transmitted by a laser radar 1, a laser radar 2, a laser radar 3, and a laser radar 4. In this way, all the N laser radars can find the target.

For example, if N is an integer greater than 2, the N laser radars are located on at least two different lines. In other words, the N laser radars are not on a same line. Further, optionally, a distance between the N laser radars needs to ensure, as much as possible, that laser beams transmitted by the laser radars do not interfere with each other. In this way, the laser beams transmitted by the N laser radars can cover a large region. This helps reduce mutual interference between the laser beams transmitted by the laser radars.

It should be noted that placement locations of the N laser radars are further related to an application scenario. For example, if four laser radars need to detect a display apparatus used by a user inside a house, the four laser radars may be evenly distributed at four locations on the roof, as shown in FIG. 3b. The laser radar 1, the laser radar 2, the laser radar 3, and the laser radar 4 are located on a same plane (namely, the roof). Based on the three-dimensional coordinate system established in FIG. 3b, the plane on which the laser radar 1, the laser radar 2, the laser radar 3, and the laser radar 4 are located may be parallel to the XOY plane. It should be understood that distribution of the four laser radars shown in FIG. 3b is merely a schematic diagram, and the N laser radars are not necessarily on a same plane, provided that the placement locations ensure that the coverage regions of the laser beams transmitted by the N laser radars overlap.

A high-resolution image may be obtained by using the N laser radars. With reference to FIG. 3c, two laser radars are used as an example. Angular resolution of a laser radar 1 is θ₁, and angular resolution of a laser radar 2 is θ₂. If only the laser radar 1 exists in the detection and communication system, only a projection point of a laser beam transmitted by the laser radar 1 exists in a region a. If both the laser radar 1 and the laser radar 2 exist in the detection and communication system, a laser beam transmitted by the laser radar 2 may overlap (may partially or totally overlap) a laser beam transmitted by the laser radar 1. It may also be understood that two laser beams are projected in a same region a, to help improve image resolution.

Further, the N laser radars search for the target, to help expand a searching range (which includes but is not limited to a distance and a region) of the detection and communication system.

In this application, the detection and communication system may further include a control apparatus. For example, the control apparatus may be a server, for example, a single server, a server cluster, or a cloud server. Alternatively, the control apparatus may be a chip or a circuit board, or may be a terminal device or the like. A specific form of the control apparatus is not limited in this application.

In a possible implementation, the control apparatus may be separately connected to the N laser radars in a wired (for example, an optical fiber) or wireless manner.

The following shows, as an example, two possible cases in which the N laser radars search for the target. It should be noted that, in the following descriptions, a laser radar that finds the target is a laser radar that transmits a laser beam pointing to a region in which the target is located, and a laser radar that does not find the target is a laser radar that transmits a laser beam not pointing to the region in which the target is located. A laser radar that aligns with the target is a laser radar that transmits a laser beam whose central region aligns with the target.

Case 1. The control apparatus finds the target based on distance information fed back by the laser radar.

Based on Case 1, the laser radar that finds the target may feed back first information to the control apparatus, where the first information indicates a first distance between the target and the laser radar that finds the target. The control apparatus may determine, based on the first information, the region in which the target is located, generate a first instruction based on the region in which the target is located, and send the first instruction to the laser radar that does not find the target. The laser radar that does not find the target performs, based on the received first instruction, searching in the region in which the target is located.

Alternatively, the laser radar that finds the target may feed back first information to the control apparatus. The control apparatus may determine, based on the first information, the region in which the target is located, generate a first instruction based on the region in which the target is located, and send the first instruction to all the N laser radars. The laser radar that does not find the target performs, based on the received first instruction, searching in the region in which the target is located. It should be understood that, the laser radar that has found the target may determine again that a searching range is the region in which the target is located, or may ignore the first instruction.

It should be noted that the laser radar that finds the target may feed back the first information to the control apparatus, or all the N laser radars may feed back a current searching status to the control apparatus in real time. The laser radar that has found the target may feed back the first information, and the laser radar that does not find the target may feed back information indicating that the target is not found. The information indicating that the target is not found may be predetermined by the laser radar and the control apparatus, or may be configured by the detection and communication system.

The following describes, in different cases based on a quantity of laser radars that find the target, a process in which the N laser radars separately search for the target.

It should be noted that, in the following descriptions, an example in which the laser radar that finds the target sends the first information to the control apparatus and the control apparatus sends the first instruction to the laser radar that does not find the target is used.

Case 1.1. One laser radar finds the target.

When one laser radar finds the target, for ease of solution description, with reference to FIG. 1d, an example in which the laser radar that finds the target is a laser radar 1 is used, and an example in which the laser radar that does not find the target is a laser radar 2, a laser radar 3, and a laser radar 4 is used. Referring to FIG. 4a, after finding the target, the laser radar 1 may estimate a first distance between the laser radar 1 and the target, and feed back the first distance to the control apparatus. The control apparatus may determine, based on the received first distance, that the region in which the target is located is a first spherical surface 1 whose center is the laser radar 1 and whose radius is the first distance; and generate the first instruction based on the region in which the target is located, where the first instruction is used to instruct the laser radar (namely, the laser radar 2, the laser radar 3, and the laser radar 4) that does not find the target to perform searching on a spherical surface whose sphere center is the laser radar 1 and whose radius is the first distance. In other words, the first instruction is used to indicate that the target is on the first spherical surface 1 whose center is the laser radar 1 and whose radius is the first distance. Correspondingly, the laser radar (namely, the laser radar 2, the laser radar 3, and the laser radar 4) that does not find the target may perform, based on the received first instruction, searching in the region in which the target is located, that is, perform searching on the spherical surface whose sphere center is the laser radar 1 and whose radius is the first distance.

Further, optionally, the first instruction may include any one of the following two possible manners, so that the laser radar that does not find the target can perform searching in the region in which the target is located.

Manner 1. The first instruction includes the region in which the target is located.

The control apparatus may generate the first instruction based on the region in which the target is located, and send the first instruction to the laser radar that does not find the target. Correspondingly, the laser radar that does not find the target may adjust a scanning region based on a current searching location and the region in which the target is located, to search for the target on the first spherical surface 1.

Manner 2. The first instruction includes a deflection amount (Δαᵢ, Δβᵢ) existing when the laser radar that does not find the target points to the region in which the target is located.

Δαᵢ=α_{i after} - α_{i before}, and Δβᵢ=β_{i after} - β_{i before}, where (α_{i after}, β_{i after}) represents a pointing direction that is of a laser radar and that exists when the laser radar performs searching in the region in which the target is located, and (α_{i before}, β_{i before}) represents a pointing direction, in a current searching region, of the laser radar that does not find the target.

The control apparatus may determine, based on the region in which the target is located and the current searching region of the laser radar that does not find the target, a deflection amount required when the laser radar that does not find the target scans the region in which the target is located, generate the first instruction based on the deflection amount, and send the first instruction to the laser radar that does not find the target. In other words, the control apparatus may determine, based on the region in which the target is located, a target searching region in which the laser radar that does not find the target needs to find the target, and generate the first instruction based on the determined target searching region. Correspondingly, after receiving the first instruction, the laser radar that does not find the target performs, based on the deflection amount included in the first instruction, adjustment to perform searching in the region in which the target is located.

It should be noted that for Manner 2, each of the N laser radars needs to report a current searching region to the control apparatus in real time.

Case 1.2. Two laser radars find the target.

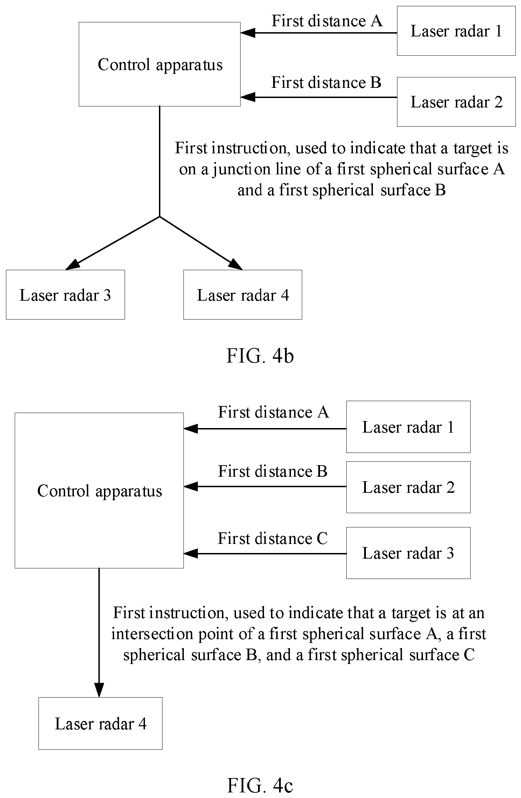

When two laser radars find the target, for ease of solution description, with reference to FIG. 1d, an example in which the laser radar that finds the target is a laser radar 1 and a laser radar 2 is used, and an example in which the laser radar that does not find the target is a laser radar 3 and a laser radar 4 is used. Referring to FIG. 4b, the laser radar 1 may determine a first distance A between the laser radar 1 and the target, and feed back the first distance A to the control apparatus, and the laser radar 2 may determine a first distance B between the laser radar 2 and the target, and feed back the first distance B to the control apparatus. The control apparatus may determine, based on the first distance A and the first distance B, that the region in which the target is located is a first spherical surface A whose center is the laser radar 1 and whose radius is the first distance A and a first spherical surface B whose center is the laser radar 2 and whose radius is the first distance B, that is, the region in which the target is located is a junction line of the first spherical surface A and the first spherical surface B; and generate the first instruction based on the region in which the target is located, where the first instruction is used to instruct the laser radar (namely, the laser radar 3 and the laser radar 4) that does not find the target to perform searching on the junction line of the first spherical surface A and the first spherical surface B. In other words, the first instruction is used to indicate that the target is on the junction line of the first spherical surface A and the first spherical surface B. Correspondingly, the laser radar (namely, the laser radar 3 and the laser radar 4) that does not find the target may perform, based on the first instruction, searching in the region in which the target is located, that is, perform searching on the junction line of the first spherical surface A and the first spherical surface B.

Further, optionally, for a manner in which the laser radar that does not find the target may search for the target in the region in which the target is located, refer to Manner 1 and Manner 2 in the foregoing Case 1.1. Details are not described herein again.

Case 1.3. Three laser radars find the target.

When three laser radars find the target, for ease of solution description, with reference to FIG. 1d, an example in which the laser radar that finds the target is a laser radar 1, a laser radar 2, and a laser radar 3 is used, and an example in which the laser radar that does not find the target is a laser radar 4 is used. Referring to FIG. 4c, the laser radar 1 may determine a first distance A between the laser radar 1 and the target, and feed back the first distance A to the control apparatus, the laser radar 2 may determine a first distance B between the laser radar 2 and the target, and feed back the first distance B to the control apparatus, and the laser radar 3 may determine a first distance C between the laser radar 3 and the target, and feed back the first distance C to the control apparatus. The control apparatus may determine, based on the first distance A, the first distance B, and the first distance C, that the region in which the target is located is a first spherical surface A whose center is the laser radar 1 and whose radius is the first distance A, a first spherical surface B whose center is the laser radar 2 and whose radius is the first distance B, and a first spherical surface C whose center is the laser radar 3 and whose radius is the first distance C, that is, the region in which the target is located is an intersection point of the first spherical surface A, the first spherical surface B, and the first spherical surface C; and generate the first instruction based on the region in which the target is located, where the first instruction is used to instruct the laser radar (namely, the laser radar 4) that does not find the target to perform searching at the intersection point of the first spherical surface A, the first spherical surface B, and the first spherical surface C. In other words, the first instruction is used to indicate that the target is at the intersection point of the first spherical surface A, the first spherical surface B, and the first spherical surface C. Correspondingly, the laser radar (namely, the laser radar 4) that does not find the target may perform, based on the first instruction, searching in the region in which the target is located, that is, the intersection point of the first spherical surface A, the first spherical surface B, and the first spherical surface C.

Further, optionally, for a manner in which the laser radar that does not find the target performs searching in the region in which the target is located, refer to Manner 1 and Manner 2 in the foregoing Case 1.1. Details are not described herein again.

It should be noted that, for the foregoing Case 1.2 and Case 1.3, two or more laser radars find the target. The laser radars that find the target may find the target sequentially, or may find the target simultaneously. In addition, more laser radars may find the target. This is not limited in this application.

Based on the foregoing Case 1.1 to Case 1.3, the N laser radars can cooperate with the control apparatus to search for the target by the N laser radars, so that at least K radars in the N laser radars can quickly align with the target. This can further reduce time for aligning with the target by the laser radar.

Further, optionally, the N laser radars may search for the target simultaneously. For example, the control apparatus may control the N laser radars to simultaneously search for the target, or the detection and communication system presets the N laser radars to simultaneously search for the target. This is not limited in this application.

Case 2. The control apparatus determines, based on point cloud data sent by the laser radar, the region in which the target is located.

In a possible implementation, the N laser radars scan a detection region, to obtain point cloud data of the detection region. The N laser radars may separately send the obtained point cloud data to the control apparatus, and the control apparatus may determine, based on the received point cloud data, the region in which the target is located. Specifically, the control apparatus may establish a three-dimensional model of the detection region based on the received point cloud data, and may determine, based on the three-dimensional model, the region in which the target is located. Further, optionally, the control apparatus may separately send a fourth instruction to the N radars, where the fourth instruction is used to indicate the region in which the target is located. Correspondingly, each of the N radars performs, based on the fourth instruction, searching in the region in which the target is located.

Based on the foregoing Case 1 or Case 2, all the N laser radars find the target, that is, all the N laser radars point to the region in which the target is located, so that the N laser radars can separately implement coarse alignment with the target. However, at this time, the central region of the laser beam transmitted by the laser radar may not align with the target. Even in Case 1.3 in the foregoing Case 1, when three or more laser radars find the target, and the target is at the intersection point of the first spherical surface A, the first spherical surface B, and the first spherical surface C, because a radius of the laser beam transmitted by the laser radar may be large, the intersection point of the first spherical surface A, the first spherical surface B, and the first spherical surface C is also large, and a central region of a light spot of the laser beam transmitted by the laser radar does not necessarily align with the target (that is, there may be a scanning residual), especially when the target is small. Therefore, a pointing direction of the laser radar further needs to be adjusted, so that the central region of the laser beam transmitted by the laser radar aligns with the target. It should be understood that, generally, light intensity of the central region of the laser beam is the strongest. After the laser radar points to the region in which the target is located, to enable a central region of a laser beam transmitted by each laser radar to align with the target, a control instruction transmitted by a feedback control component corresponding to each laser radar may be used to adjust a pointing direction of the laser radar, to precisely track the target, so that a central region of a laser beam transmitted by the laser radar that finds the target aligns with the target.

In a possible implementation, each of the N laser radars corresponds to one feedback control component. The laser radar that finds the target may transmit a laser beam to the detection region, receive an echo optical signal from the target, determine a location relationship (for example, a deviation) between a central region of the transmitted laser beam and the target based on the echo optical signal, and send fourth information to the feedback control component, where the fourth information may indicate a location relationship between the target and a central region of an electromagnetic wave transmitted by the laser radar that finds the target. Correspondingly, the feedback control component may be configured to: receive the fourth information from the laser radar that finds the target, generate a control instruction based on the fourth information, and send the control instruction to the laser radar that finds the target. Correspondingly, the radar that finds the target may adjust a pointing direction of the transmitted laser beam based on the control instruction, so that the central region of the transmitted laser beam aligns with the target.

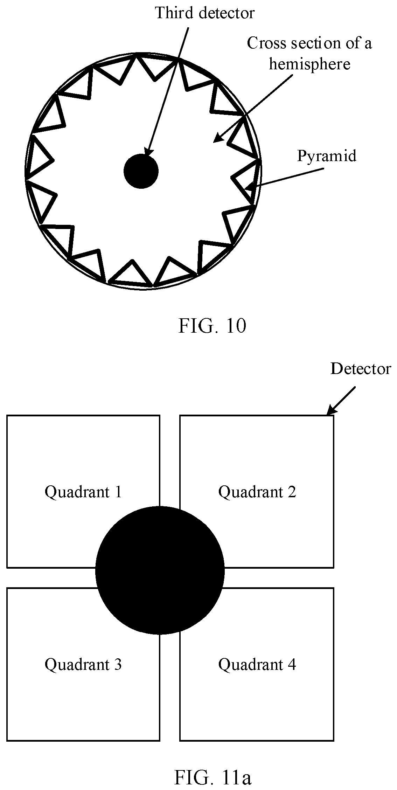

For example, the laser radar may include a detector and a scanning component, where the detector may be a four-quadrant detector. FIG. 11a is a schematic diagram of a structure of a four-quadrant detector according to this application. The four-quadrant detector is a photodetector formed by arranging four photodiodes with same performance based on a rectangular coordinate requirement. The four-quadrant detector includes a photodiode in a quadrant 1, a photodiode in a quadrant 2, a photodiode in a quadrant 3, and a photodiode in a quadrant 4.

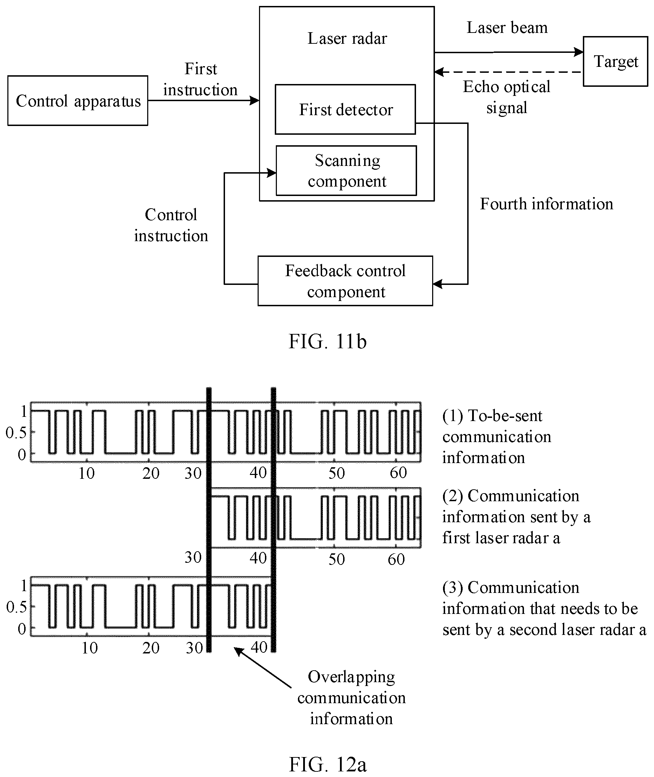

FIG. 11b is a schematic diagram of a process of alignment between a laser radar and a target according to this application. The laser radar may include a four-quadrant detector (refer to the foregoing FIG. 11a) and a scanning component. After receiving the first instruction from the control apparatus, the laser radar adjusts a pointing direction of the laser radar to point to the region in which the target is located, and transmits a laser beam to the region in which the target is located. After the laser beam is reflected by the region in which the target is located, an echo optical signal is obtained. After the four-quadrant detector may receive the echo optical signal from the region in which the target is located, each quadrant may detect one piece of light intensity information, and the four-quadrant detector may separately transmit the detected light intensity information (namely, the fourth information) of the four quadrants to the feedback control component. Correspondingly, the feedback control component may determine an adjustment direction of the scanning component by comparing the light intensity information of the four quadrants, generate a control instruction based on the determined adjustment direction, and transmit the control instruction to the scanning component. Correspondingly, the scanning component receives the control instruction from the feedback control component, and adjusts the pointing direction of the laser beam based on the control instruction, to align a central region of the transmitted laser beam with the target. It should be understood that, when the intensity information of the four quadrants is the same, it indicates that the echo optical signal received by the detector in the laser radar exactly aims at the center of the four quadrants, that is, the central region of the laser beam transmitted by the laser radar aligns with the target.

In a possible implementation, one laser radar corresponds to one feedback control component. The feedback control component may be integrated inside a corresponding laser radar, or may be connected to a corresponding laser radar by using a physical connection line. For example, the feedback control component may be a control component such as a processor, a microprocessor, or a controller, for example, may be a general-purpose central processing unit (CPU), a general-purpose processor, a digital signal processor (DSP), an application-specific integrated circuit (ASIC), a field programmable gate array (FPGA) or another programmable logic device, a transistor logic device, a hardware component, or any combination thereof.

In a possible implementation, the scanning component may be a scanner such as a reflective scanner. The reflective scanner includes but is not limited to a mechanical rotation mirror and an MEMS micro-oscillating mirror. The reflective scanner changes a scanning direction of the scanner through mechanical rotation.

After at least K radars in the N laser radars align with the target, the first laser radar is configured to communicate with the target, and the second laser radar is configured to track and point the target.

In a possible implementation, a specific laser radar that is in the N laser radars and that is configured to communicate with the target and a specific laser radar configured to track and point the target may be controlled by the control apparatus, or may be preconfigured by the detection and communication system. For example, laser radars at some locations may be configured to communicate with the target, and laser radars at some other locations may be configured to track and point the target. Alternatively, the laser radar may determine whether the laser radar can communicate with the target. For example, if a laser radar determines that strength of a received echo signal is greater than a strength threshold, the laser radar determines that the laser radar can communicate with the target.

The following shows, as an example, three possible manners of determining a specific laser radar configured to communicate with the target.

Manner 1. The laser radar determines whether the laser radar can be configured to communicate with the target. Based on Manner 1, the laser radar receives an echo signal from the target, and if determining that strength of the received echo signal is greater than the strength threshold, the laser radar determines that the laser radar can communicate with the target, and may be used as the first laser radar.

Manner 2. The control apparatus determines a laser radar that can be configured to communicate with the target.

Based on Manner 2, the N laser radars separately receive an echo signal from the target, separately determine strength of a corresponding echo signal, and feed back the determined strength of the echo signal to the control apparatus. The control apparatus may determine, as the first laser radar, laser radars corresponding to the first K pieces of strength in the strength (in descending order of strength) of the echo signals. Alternatively, the control apparatus may determine, as the first laser radar, laser radars corresponding to K pieces of strength that are greater than the strength threshold and that are in the strength of the echo signals.

It should be understood that, if the strength of the echo signal is higher, it indicates that accuracy of aligning the laser beam transmitted by the laser radar with the target is higher, and the target is not blocked, and can reflect the echo signal as much as possible.

Manner 3. The control apparatus performs random selection.

The control apparatus may randomly select K radars in the N laser radars as the first laser radar.

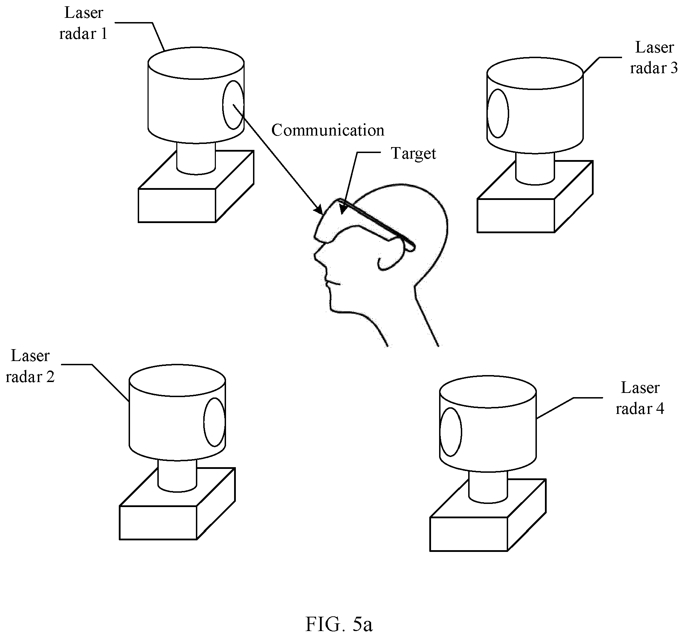

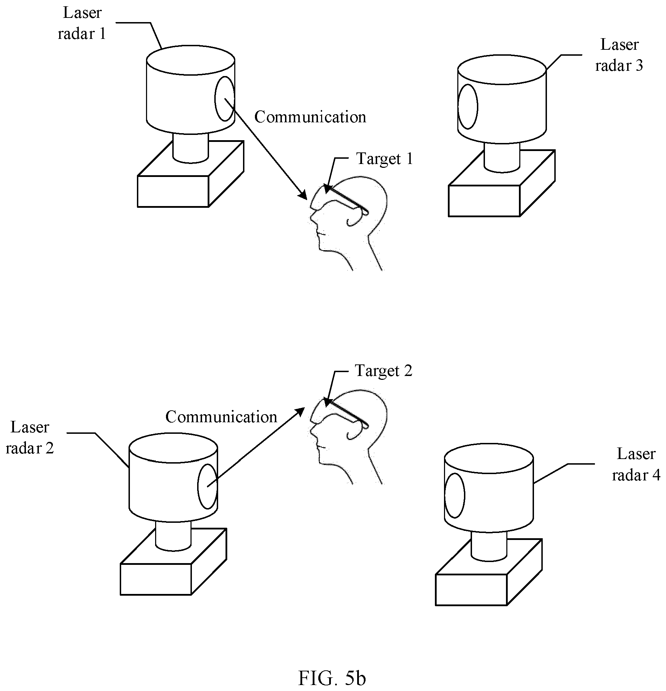

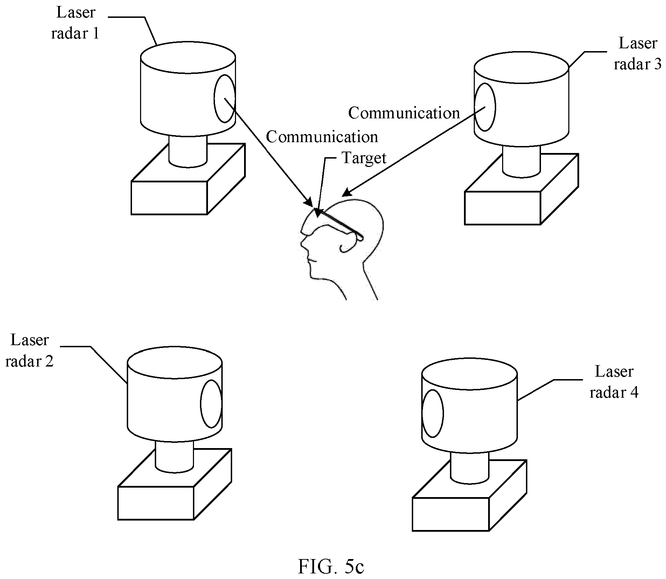

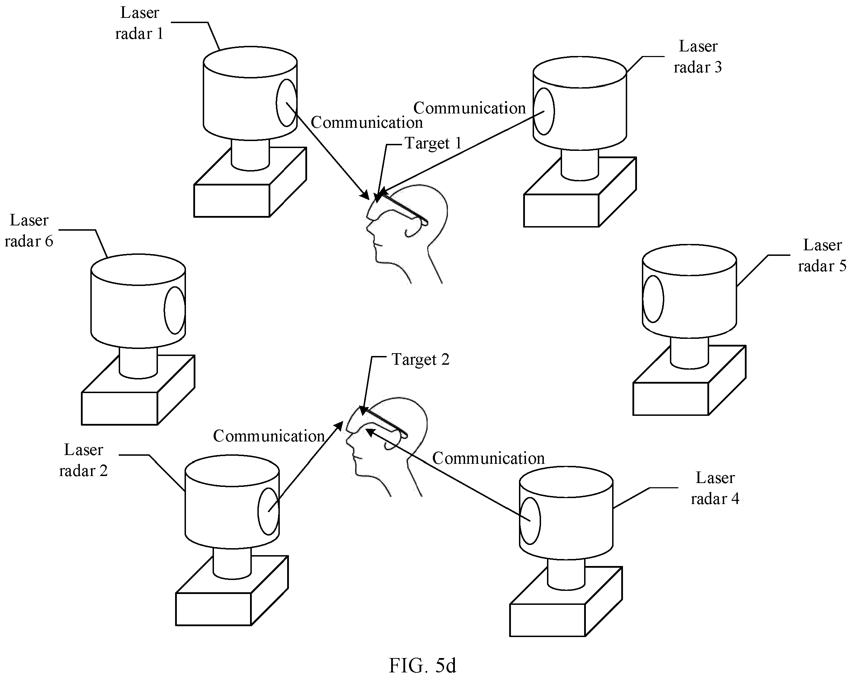

It should be noted that, in the K first laser radars, referring to FIG. 5a or FIG. 5b, one first laser radar may communicate with one target, that is, the first laser radar performs one-to-one communication with the target. Alternatively, referring to FIG. 5c or FIG. 5d, a plurality of first laser radars may communicate with one target, that is, the first laser radars perform many-to-one communication with the target.

The first laser radar may be configured to communicate with the target, and may also be configured to track and point the target. The following describes a process of interaction between the first laser radar and the target, to provide an example implementation solution.

In a possible implementation, the first laser radar may be further configured to transmit a first laser beam to the target in a first time domain, where the first laser beam carries communication information, that is, the first laser beam is used to implement communication between the first laser radar and the target. The first laser radar may be further configured to transmit a second laser beam to the target in a second time domain, where the second laser beam is used to determine a first distance between the first laser radar and the target. In other words, the first laser radar may separately transmit the first laser beam or the second laser beam to the target in different time domains. In other words, the first laser radar transmits the first laser beam and the second laser beam to the target in a time division multiplexing manner.

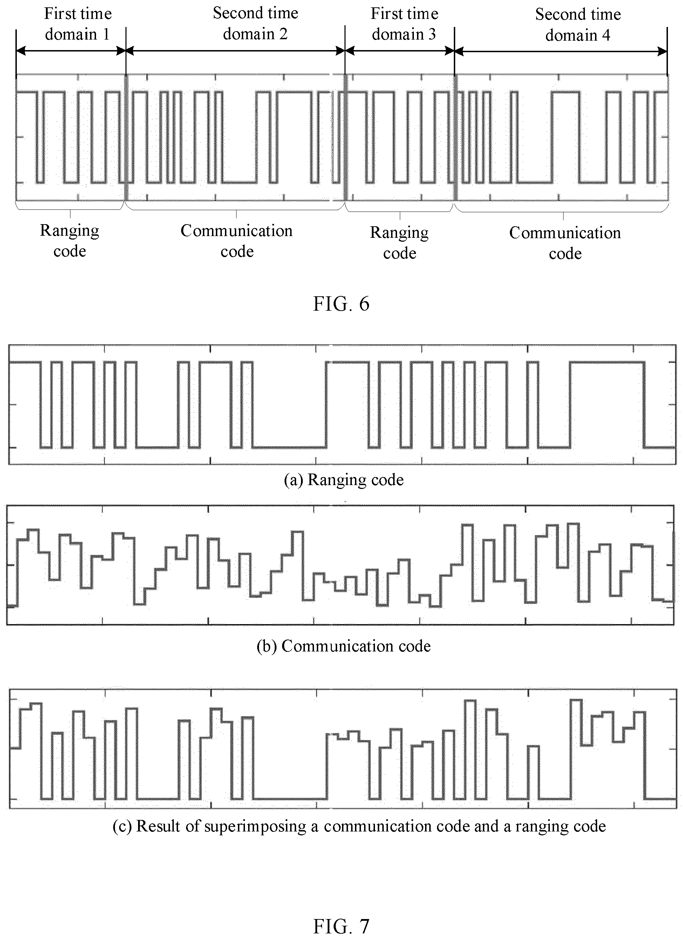

FIG. 6 is a schematic diagram of a relationship between a first time domain and a second time domain according to this application. The first time domain and the second time domain are alternately arranged, and form consecutive time domains. The first time domain includes a first time domain 1 and a first time domain 3, and the second time domain includes a second time domain 2 and a second time domain 4. The first time domain 1, the second time domain 2, the first time domain 3, and the second time domain 4 form consecutive time domains. In other words, the first time domain 1, the second time domain 2, the first time domain 3, and the second time domain 4 are four consecutive time domains. That is, the first laser beam and the second laser beam that are transmitted by the first laser radar are consecutive laser beams.

It should be noted that duration of the first time domain 1 may be the same as or different from duration of the first time domain 3, duration of the second time domain 2 may be the same as or different from duration of the second time domain 4, and duration of the first time domain may be the same as or different from duration of the second time domain. This is not limited in this application.

With reference to FIG. 6, the first laser radar may transmit, to the target in the first time domain 1, the first laser beam that carries the communication information; then transmit, to the target in the second time domain 2, the second laser beam that is used to determine the first distance; then transmit, to the target in the first time domain 3, the first laser beam that carries the communication information; and then transmit, to the target in the second time domain 4, the second laser beam that is used to determine the first distance. It should be understood that the communication information carried by the first laser beam transmitted in the first time domain 1 may be the same as or different from the communication information carried by the first laser beam transmitted in the first time domain 2. This is not limited in this application.

To enable the target to distinguish the first laser beam from the second laser beam, the following shows, as an example, two possible implementations of modulating a laser beam.

Implementation 1. Modulation is performed by using a communication code and a ranging code.

For example, in the first time domain, the first laser radar may encode the communication information to obtain a communication code (refer to the foregoing FIG. 6), and modulate the communication code onto a to-be-transmitted laser beam to obtain the first laser beam; and in the second time domain, the first laser radar may modulate a ranging code (refer to the foregoing FIG. 6) onto a to-be-transmitted laser beam to obtain the second laser beam. The ranging code in FIG. 6 is 1101100101, and the ranging codes in the first time domain 1 and the first time domain 3 are the same.

It should be noted that ranging codes in different time periods are the same, and communication codes in different time periods may be the same or different.

Implementation 2. amplitude modulation is performed.

Amplitude modulation is to superimpose, as an identifier, a small amplitude of low-frequency sine or cosine modulation on each wavelength. Different frequency identifiers are used for different wavelengths. When the low-frequency sine or cosine signal is superimposed on the optical wavelength, a modulation amplitude exists on the optical wavelength. An optical channel is marked by using low-frequency amplitude modulation, and a amplitude modulation signal is superimposed on an original signal, so that the signals are transmitted to the target together.

For example, the first laser radar may be further configured to: combine (or referred to as "superimpose") the communication code and the ranging code, modulate the combined communication code and ranging code onto a to-be-transmitted laser beam to obtain a fourth laser beam, and transmit the fourth laser beam to the target. A manner of combining the communication code and the ranging code includes but is not limited to multiplication.

In a possible implementation, the communication code may be superimposed on the ranging code, or the ranging code may be superimposed on the encoded communication information. FIG. 7 is a schematic diagram of a amplitude modulation process according to this application, where (a) in FIG. 7 represents the communication code, (b) in FIG. 7 represents the ranging code, and (a) in FIG. 7 may be multiplied by (b) in FIG. 7, to obtain (c) in FIG. 7, or (b) in FIG. 7 may be multiplied by (a) in FIG. 7, to obtain (c) in FIG. 7.

It should be noted that the foregoing modulation may be modulation performed by a modulator inside the laser radar, or may be modulation performed by a modulator outside the laser radar. During modulation of the modulator, generally, a phase may be modulated by an acousto-optic modulator or an electro-optic modulator.

When K is greater than 1, the K laser radars may simultaneously communicate with the target, so that a data communication capability can be improved. Specifically, after all the K laser radars align with the target, a laser radar that is close to the target may delay sending data, so that it can be ensured that data sent by the laser radar that is close to the target and data sent by a laser radar that is far away from the target can simultaneously arrive at the target, to ensure that data arriving at the target is consistent. When the data received by the target is inconsistent, the target may compensate for the received data. For example, if the data received by the target from the laser radar 1 is 101100000, and the data received by the target from the laser radar 2 is 1100000, the target may compensate for the data 1100000 from the laser radar 2 to obtain 101100000, to ensure that the data obtained by the target is consistent.

Further, a capacity of communication with the target can be increased by communicating with the target by using the K first laser radars. Two laser radars (a laser radar 1 and a laser radar 2) are used as an example. The laser radar 1 may transmit a signal carrying m₁ G data to the target, and the laser radar 2 may transmit a signal carrying m₂ G data to the target. Time points at which the two laser radars transmit a signal may be controlled to be the same, to ensure that the signals simultaneously arrive at the target, that is, a capacity that can be simultaneously transmitted by the detection and communication system to the target is (m₁+m₂) G.

In this application, the detection and communication system may further include a target. The target may be an object whose distance and/or speed need/needs to be measured, or may be a moving object or a still object. References may be made to the descriptions of the target in the foregoing scenario. Details are not described herein again.

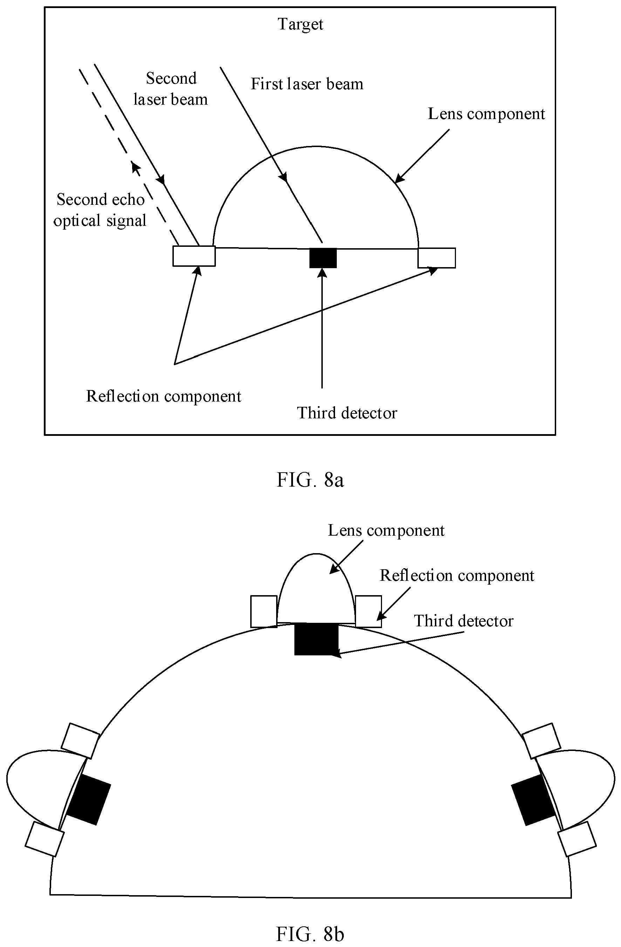

FIG. 8a is a schematic diagram of a structure of a target according to this application. The target is a cooperative target. The target may include a lens component, a reflection component, and a third detector. The lens component is configured to converge the received first laser beam to the third detector. The third detector is configured to demodulate the received first laser beam to obtain the communication information carried by the first laser beam. The reflection component is configured to reflect the second laser beam to obtain the second echo signal. Further, optionally, the reflection component may be configured to reflect the second echo signal to the first laser radar, so that the first laser radar determines the first distance between the first laser radar and the target based on the second laser beam and the second echo signal.

It should be noted that the lens component is further configured to: receive the second laser beam from the first laser radar, and converge the received second laser beam to the third detector, but the third detector cannot demodulate the second laser beam. In addition, the reflection component is further configured to reflect the first laser beam. However, because the first laser beam carries the communication information sent by the laser radar to the target, a reflection effect of the target on the first laser beam is generally not considered.

The target may be applied to a display apparatus that can be worn by the user, for example, a helmet (refer to FIG. 8b) or AR glasses. One or more targets may be disposed on the display apparatus that can be worn by the user. In FIG. 8b, an example in which three targets are disposed is used. When a large quantity of targets are disposed, the region in which the target is located may be further quickly determined.

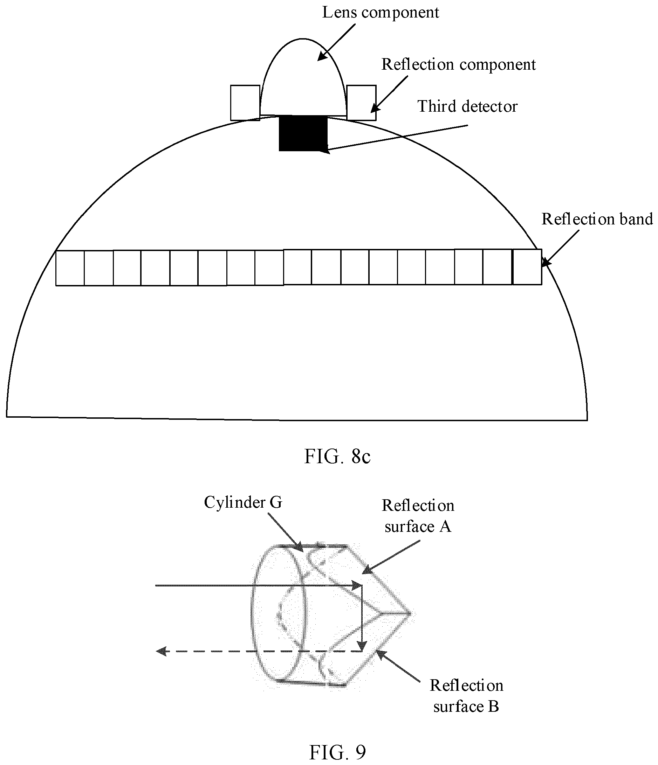

When one target is disposed on the display apparatus that can be worn by the user, to precisely and quickly determine the region in which the target is located, referring to FIG. 8c, at least one circle reflection band may also be disposed on the display apparatus that can be worn by the user. It should be understood that a location relationship between the reflection band disposed on the target and the target is determined. Therefore, a location at which the laser beam is emitted to the reflection band is determined, so that the region in which the target is located can be roughly estimated. The following separately describes the functional components and structures shown in FIG. 8a, to provide an example of a specific implementation solution.

### 1. Reflection component

FIG. 9 is a schematic diagram of a structure of a reflection component according to this application. The reflection component is a pyramid. The pyramid includes a reflection surface A, a reflection surface B, and a cylinder G. The second laser beam may be emitted from the cylinder G of the pyramid into the reflection surface A, reflected by the reflection surface A to the reflection surface B, and then reflected by the reflection surface B to obtain the second echo signal, so that the second echo signal is transmitted to the first laser radar by using the cylinder G.

In a possible implementation, the lens component may be a hemisphere lens, and the pyramid may be closely arranged and fastened on a cross section of the hemisphere. For example, the reflection component may be glued to the cross section of the hemisphere. FIG. 10 is a schematic diagram in which pyramids are closely arranged and are fastened on a cross section of a hemisphere of a hemisphere lens.

### 2. Third detector

In a possible implementation, the third detector may be, for example, any one of a PIN photodiode (also referred to as a PIN diode), an avalanche photodiode (APD), a PIN photodiode array, and an APD array, or a balanced detector formed by combining PIN photodiodes, or a balanced detector formed by combining APDs, or a balanced detector formed by combining PIN photodiode arrays, or a balanced detector formed by combining APD arrays.

If the first laser radar obtains the first laser beam and the second laser beam through modulation in the foregoing Implementation 1, after the third detector receives the first laser beam and the second laser beam, the third detector may determine the second laser beam by using the ranging code, and then determine the first laser beam. With reference to FIG. 6, the third detector may determine that the first laser beam is between two second laser beams, and then demodulate the first laser beam to obtain the communication information.

If the first laser radar obtains the fourth laser beam through modulation in the foregoing Implementation 2, the communication code may be obtained by separating the combined ranging code and communication code that is modulated onto the fourth laser beam, and the communication information may be obtained by demodulating the communication code.

It should be understood that the N laser radars in the detection and communication system and the target may agree on the ranging code in advance.

Based on the second echo signal reflected back by the target, a first detector included in the first laser radar may determine the first distance between the first laser radar and the target based on the received second echo signal and the transmitted second laser beam.

For example, the first detector may be any one of a PIN photodiode (also referred to as a PIN diode), an avalanche photodiode (APD), a PIN photodiode array, and an APD array, or a balanced detector formed by combining PIN photodiodes, or a balanced detector formed by combining APDs, or a balanced detector formed by combining PIN photodiode arrays, or a balanced detector formed by combining APD arrays, or a charge coupled device (CCD). It should be noted that, if the first detector is a four-quadrant detector, in a process in which the laser radar performs coarse alignment with the target, the four quadrants output total light intensity information, and light intensity information of each quadrant does not need to be output.

In a possible implementation, the first detector may determine the first distance between the first laser radar and the target based on an echo delay ττ corresponding to the second laser beam and the speed C of light. The echo delay corresponding to the second laser beam is a time difference between a moment at which the first laser radar transmits the second laser beam and a moment at which the second echo signal is received by the first detector.

For example, with reference to FIG. 6, if a ranging code corresponding to the second laser beam transmitted by the first laser radar is 1101100101, a moment corresponding to the second laser beam is t₁, and a moment at which the first detector receives the second echo signal whose ranging code is 1101100101 is t₂, it may be determined that the first distance is equal to C×τ/2=C×(t₂-t₁)/2.

The following describes a process in which the second laser radar tracks and points the target, to provide an example implementation solution.

In a possible implementation, the second laser radar is further configured to transmit a third laser beam to the target, and the third laser beam is used to determine a first distance between the second laser radar and the target. Further, optionally, the second laser radar may further include a second detector. It should be understood that a manner in which the second laser radar determines the first distance between the second laser radar and the target is the same as a manner in which the first laser radar determines the first distance between the first laser radar and the target. Details are not described herein again.

It should be noted that, based on any one of the foregoing targets in FIG. 8a to FIG. 10, the lens component may be further configured to: receive the third laser beam from the second laser radar, and converge the third laser beam to the third detector. Because the third laser beam is used to determine the distance between the second laser radar and the target, the third detector generally does not need to demodulate the third laser beam. The reflection component may be further configured to reflect the third laser beam to obtain a third echo signal. Further, optionally, the reflection component may be configured to reflect the third echo signal to the second laser radar, so that the second laser radar determines the first distance between the second laser radar and the target based on the third laser beam and the third echo signal.

In this application, the target may move. After the target moves, the second laser radar may determine in a timely manner that the target moves, and may accurately adjust a pointing direction of the second laser radar by using a feedback control component corresponding to the second laser radar, to precisely track the moving target, and send second information to the control apparatus. The second information indicates a location of the target after movement. Correspondingly, the control apparatus is further configured to: receive the second information from the second laser radar, determine, based on the second information, a pointing direction that is of the first laser radar and that exists when the first laser radar aligns with the moved target; and generate a third instruction based on the pointing direction that is of the first laser radar and that exists when the first laser radar aligns with the moved target, and send the third instruction to the first laser radar. The first laser radar that receives the third instruction adjusts the pointing direction of the first laser radar again, so that the central region of the laser beam transmitted by the first laser radar can align with the target.

Because the target moves, some laser radars may not align with the target in a timely manner. To ensure communication reliability, the control apparatus is further configured to: when determining that a laser radar that does not align with the target exists in the K first laser radars, send a second instruction to the M laser radars in the second laser radars, where the second instruction is used to instruct the M laser radars to communicate with the target. Correspondingly, the M laser radars in the second laser radars are further configured to: receive the second instruction from the control apparatus, and communicate with the target based on the second instruction, where N is an integer greater than 2, N-K is an integer greater than or equal to 2, and M is a positive integer less than N-K. In other words, the M second laser radars that receive the second instruction switch to a communication mode.

It should be noted that M is an integer less than N-K, so that it can be ensured that the N laser radars include both a first laser radar configured to communicate with the target and a second laser radar configured to track and point the target.

For example, if determining that one first laser radar does not align with the target, the control apparatus may send the second instruction to one, two, or more second laser radars, so that some second laser radars switch to communicate with the target. When the two or more second laser radars switch to communicate with the target, communication reliability can be ensured, and a transmission rate of communication information can also be improved.

To further ensure communication reliability, when a second laser radar (referred to as a second laser radar a) that switches to the communication mode sends communication information to the target, the communication information needs to partially overlap communication information sent by a first laser radar (referred to as a first laser radar a) that does not align with the target. With reference to FIG. 12a, to-be-sent communication information is shown in (1) in FIG. 12a, the communication information sent by the first laser radar a is shown in (2) in FIG. 12a, and the communication information that needs to be sent by the second laser radar a is shown in (3) in FIG. 12a. The communication information sent by the first laser radar a and the communication information sent by the second laser radar a partially overlap, so that when the laser radar switches, the communication information received by the target is not interrupted.

Based on the foregoing content, the following provides a specific implementation of the foregoing detection and communication system by using a specific hardware structure. In this way, a structure of the foregoing detection and communication system and an implementation process of detecting the target can be further understood.

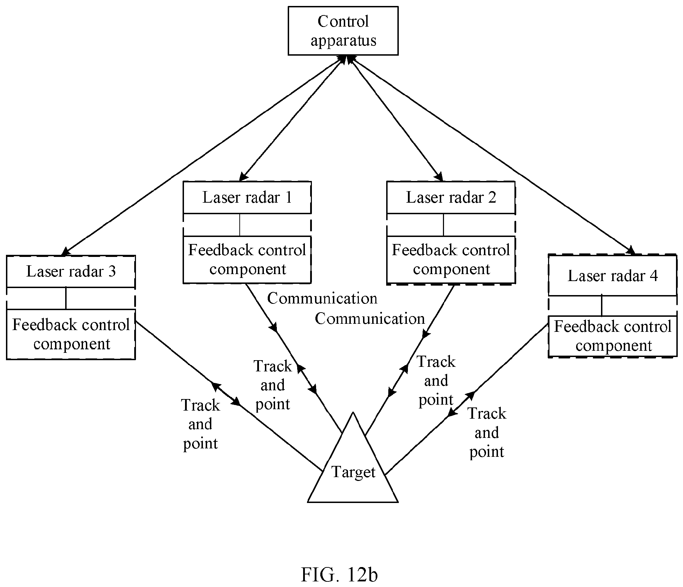

FIG. 12b is a schematic diagram of a structure of another detection and communication system according to this application. The detection and communication system may include four laser radars (a laser radar 1, a laser radar 2, a laser radar 3, and a laser radar 4), a control apparatus, and a movable target. Each laser radar is connected to one feedback control component by using a physical connection line. The laser radar 1 and the laser radar 2 are used as first laser radars, and the laser radar 3 and the laser radar 4 are used as second laser radars. A location of the target may be represented by (x^{T}, y^{T}, z^{T}).

The four laser radars may simultaneously search for the target, and separately align with the target. For a specific process of searching for the target, refer to the related descriptions in the foregoing Case 1.1 to Case 1.3. After all the four laser radars align with the target, the laser radar 1 and the laser radar 2 are configured to communicate with the target. For a specific process, refer to the related descriptions of the foregoing process of interaction between the first laser radar and the target. It should be understood that communication is unidirectional, that is, the first laser radar transmits communication information to the target, and the target does not transmit a signal to the first laser radar. The laser radar 3 and the laser radar 4 are configured to track and point the target. For a specific process, refer to the related descriptions of the foregoing process in which the second laser radar tracks and points the target. Details are not described herein again.

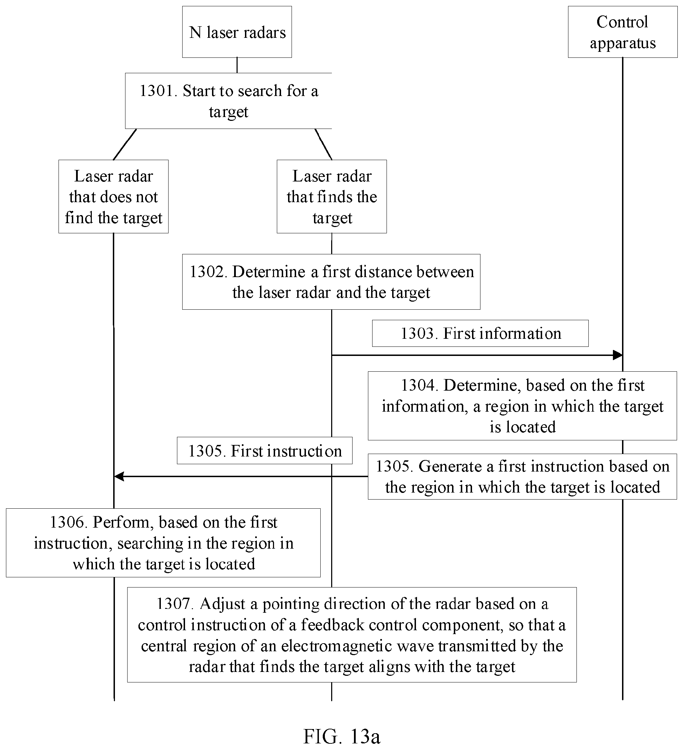

Based on the foregoing content and a same concept, this application provides a detection method. References may be made to descriptions in FIG. 13a. The detection method may be applied to the detection and communication system in any one of the embodiments in FIG. 2 to FIG. 12b. A control apparatus may be the control apparatus in any one of the foregoing embodiments, and N laser radars may be the N laser radars in any one of the foregoing embodiments. As shown in FIG. 13a, the detection method includes the following steps.

Step 1301. The N laser radars start to search for a target.

Herein, the control apparatus may control the N laser radars to start to search for the target, or the N laser radars may agree on the step in advance.

Step 1302. A laser radar that finds the target determines a first distance between the laser radar and the target.

Step 1303. The laser radar that finds the target sends first information to the control apparatus. Correspondingly, the control apparatus receives the first information from the laser radar that finds the target.

Herein, the first information may be used to indicate the first distance between the target and the laser radar that finds the target.

Step 1304. The control apparatus determines, based on the first information, a region in which the target is located. Step 1305. The control apparatus generates a first instruction based on the region in which the target is located, and sends the first instruction to a laser radar that does not find the target. Correspondingly, the laser radar that does not find the target receives the first instruction from the control apparatus.

Herein, the control apparatus may separately determine, based on the region in which the target is located, a searching region of each laser radar that does not find the target; and generate the first instruction based on the searching region of the laser radar that does not find the target, where the first instruction is used to instruct the laser radar that does not find the target to perform searching in the region in which the target is located.

For detailed descriptions of the first instruction, refer to the foregoing Manner 1 and Manner 2. Details are not described herein again.

Step 1306. The laser radar that does not find the target performs, based on the first instruction, searching in the region in which the target is located.

Step 1307. The laser radar that finds the target adjusts a pointing direction of the radar based on a control instruction of a feedback control component, so that a central region of an electromagnetic wave transmitted by the radar that finds the target aligns with the target.

Based on the foregoing step 1301 to step 1306, all the N laser radars can find the target. Based on the foregoing step 1307, central regions of laser beams transmitted by the N laser radars can align with the target.

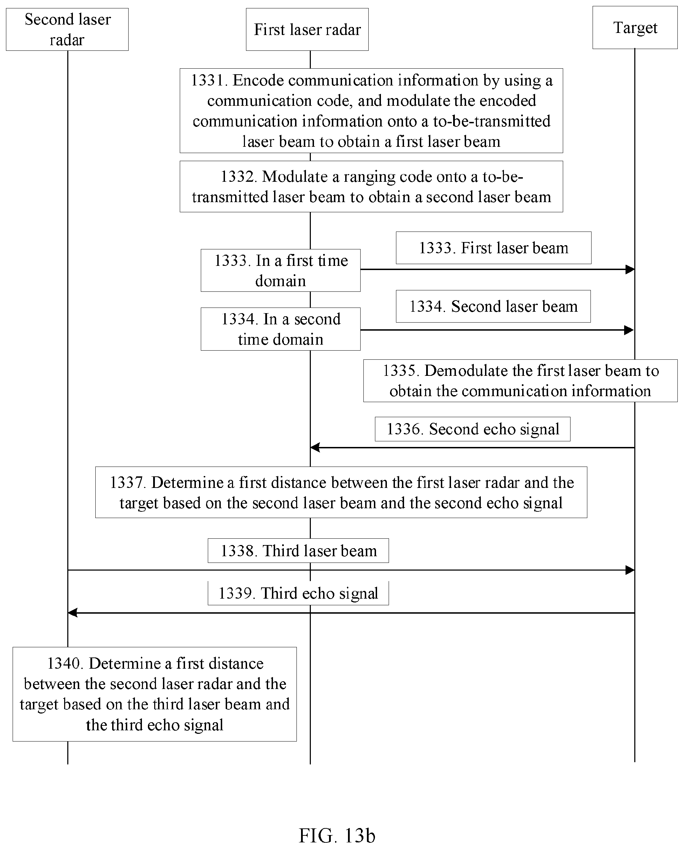

After at least K radars in the N laser radars align with the target, the first laser radar is configured to communicate with the target, and the second laser radar is configured to track and point the target. For a specific method procedure, refer to the following FIG. 13b.

As shown in FIG. 13b, the method includes the following steps.

Step 1331. The first laser radar encodes communication information to obtain a communication code, and modulates the communication code onto a to-be-transmitted laser beam to obtain a first laser beam.

Step 1332. The first laser radar modulates the ranging code onto a to-be-transmitted laser beam to obtain a second laser beam.

It should be noted that there is no sequence between step 1331 and step 1332. Step 1331 may be performed before step 1332, or step 1332 may be performed before step 1331, or step 1331 and step 1332 may be performed simultaneously.

Step 1333. The first laser radar transmits the first laser beam to the target in a first time domain. Correspondingly, the target receives the first laser beam from the first laser radar.

Step 1334. The first laser radar transmits a second laser beam to the target in a second time domain. Correspondingly, the target receives the second laser beam from the first laser radar.

Step 1335. The target demodulates the first laser beam to obtain the communication information.

Step 1336. The target reflects a second echo signal to the first laser radar.

Step 1337. The first laser radar determines a first distance between the first laser radar and the target based on the second laser beam and the second echo signal.

Step 1338. The second laser radar transmits a third laser beam to the target. Correspondingly, the target receives the third laser beam from the second laser radar.

It should be noted that step 1338 may be performed before step 1331, or may be performed in any step after step 1331. In other words, the first laser radar and the second laser radar may independently transmit a laser beam, and there is no transmission sequence between the two laser radars.

Step 1339. The target reflects a third echo signal to the second laser radar.

Step 1340. The second laser radar may determine a first distance between the second laser radar and the target based on the third electromagnetic wave and the third echo signal.

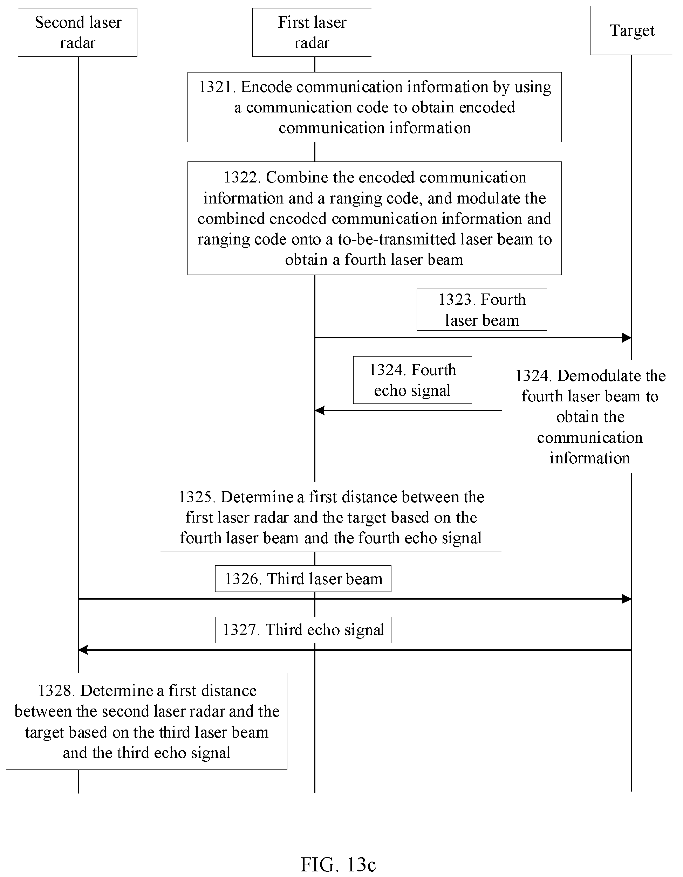

After at least K radars in the N laser radars all align with the target, the first laser radar is configured to communicate with the target, and the second laser radar is configured to track and point the target. For a specific method procedure, refer to the following FIG. 13c.

Step 1321. The first laser radar encodes communication information to obtain the communication code.

Step 1322. The first laser radar combines the communication code and a ranging code, and modulates the combined communication code and ranging code onto a to-be-transmitted laser beam to obtain a fourth laser beam.

Step 1323. The first laser radar transmits the fourth laser beam to the target.

Step 1324. The target demodulates the fourth laser beam to obtain the communication information, and reflects a fourth echo signal to the first laser radar.

Step 1325. The first laser radar determines a first distance between the first laser radar and the target based on the fourth laser beam and the fourth echo signal.

Step 1326. The second laser radar transmits a third laser beam to the target. Correspondingly, the target receives the third laser beam from the second laser radar.

Step 1327. The target reflects a third echo signal to the second laser radar.

Step 1328. The second laser radar may determine a first distance between the second laser radar and the target based on the third laser beam and the third echo signal.

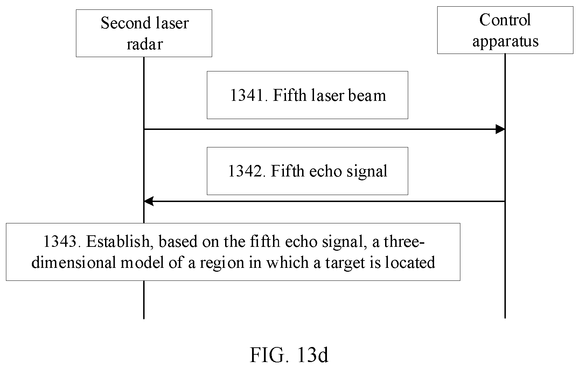

After at least K radars in the N laser radars all align with the target, the second laser radar may be further configured to scan the target to obtain three-dimensional information of a scenario in which the target is located. For a specific method procedure, refer to the following FIG. 13d.

Step 1341. The second laser radar transmits a fifth laser beam to the region in which the target is located.

Step 1342. The region in which the target is located and the target reflect a fifth echo signal to the second laser radar.

Step 1343. The second laser radar may establish, based on the fifth echo signal, a three-dimensional model of the region in which the target is located.

Information such as a posture of the target and a three-dimensional model may be obtained based on the foregoing step 1341 to step 1343.

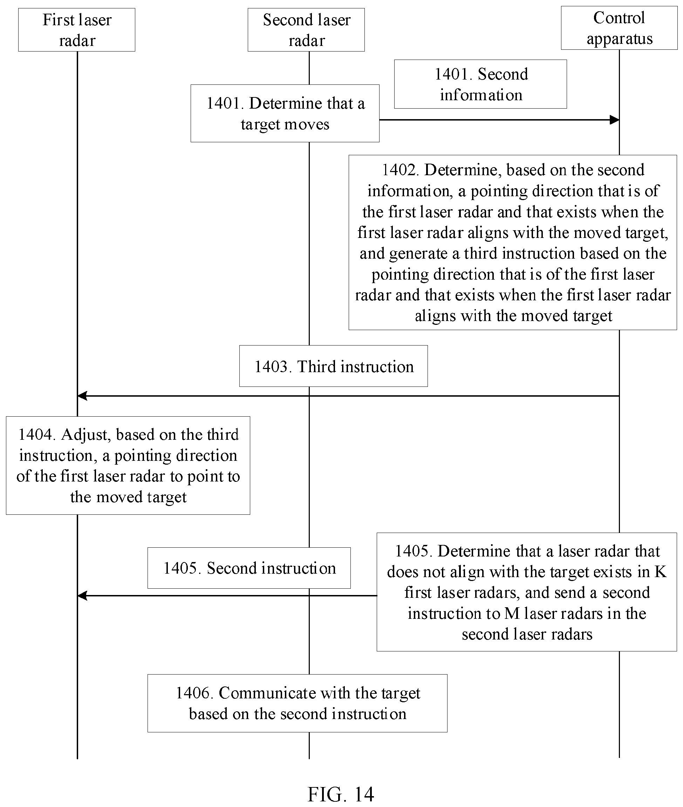

In this application, the target may move. After the target moves, to enable a laser radar to align with the target in a timely manner, FIG. 14 shows another detection method provided in this application. The detection method includes the following steps.

Step 1401. The second laser radar determines that the target moves, and sends second information to the control apparatus. Correspondingly, the control apparatus receives the second information from the second laser radar. Herein, the second information includes a location of the target after movement.

Step 1402. The control apparatus determines, based on the second information, a pointing direction that is of the first laser radar and that exists when the first laser radar aligns with the moved target, and generates a third instruction based on the pointing direction that is of the first laser radar and that exists when the first laser radar aligns with the moved target.

Step 1403. The control apparatus sends a third instruction to the first laser radar. Correspondingly, the first laser radar receives the third instruction from the control apparatus.

In a possible implementation, the control apparatus determines, based on the second information, the pointing direction that is of the first laser radar and that exists when the first laser radar aligns with the moved target.

Step 1404. The first laser radar adjusts, based on the third instruction, a pointing direction of the first laser radar to point to the moved target.

Step 1405. The control apparatus determines that a laser radar that does not align with the target exists in the K first laser radars, and sends a second instruction to M laser radars in the second laser radars. Correspondingly, the M second laser radars receive the second instruction from the control apparatus.

Herein, the second instruction is used to instruct the M laser radars to communicate with the target.

Step 1406. The M second laser radars communicate with the target based on the second instruction.

It should be noted that step 1402 to step 1404 may be performed before step 1405 and step 1406; or step 1405 and step 1406 may be performed before step 1402 to step 1404.

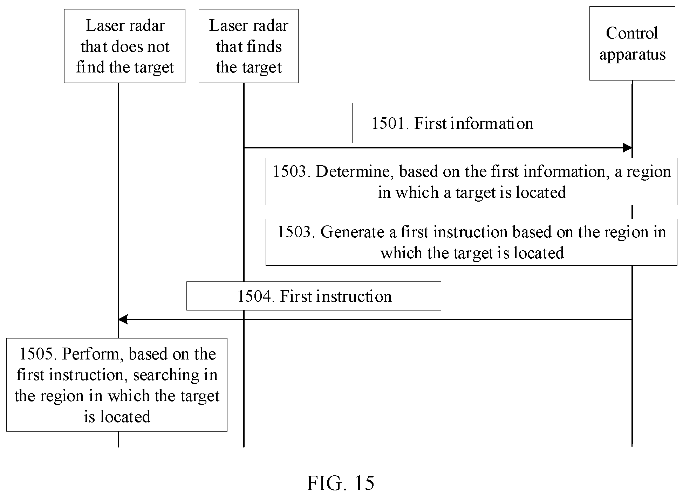

Based on the foregoing content and a same concept, this application provides a control method. References may be made to descriptions in FIG. 15. The control method may be applied to the control apparatus in any one of the embodiments in FIG. 2 to FIG. 12b.

As shown in FIG. 15, the control method includes the following steps.

Step 1501. A laser radar that finds a target sends first information to the control apparatus. Correspondingly, the control apparatus receives the first information from the laser radar that finds the target, where the first information indicates a first distance between the target and the laser radar that finds the target, and the laser radar that finds the target is at least one laser radar in N laser radars.

Step 1502. The control apparatus determines, based on the first information, a region in which the target is located. Step 1503. The control apparatus generates a first instruction based on the region in which the target is located.

Step 1504. The control apparatus sends the first instruction to a laser radar that does not find the target, where the first instruction is used to instruct the laser radar that does not find the target to perform searching in the region in which the target is located, the laser radar that does not find the target is a laser radar other than the laser radar that finds the target in the N laser radars, and N is an integer greater than 1.

Step 1505. The laser radar that does not find the target performs, based on the first instruction, searching in the region in which the target is located.

It should be noted that, for possible implementations of the N laser radars and the control apparatus in the foregoing method embodiment, refer to the foregoing related descriptions. Details are not described herein again.

Based on the foregoing content and a same concept, the following shows, as an example, schematic flowcharts of methods in different scenarios based on a possible application scenario of this application.

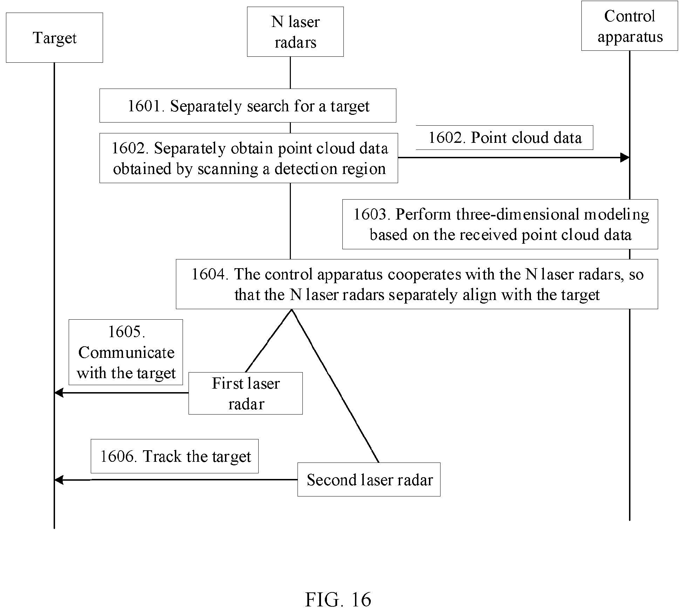

FIG. 16 is a schematic flowchart of still another detection and communication method according to this application. The method may be applied to any scenario in FIG. 1b to FIG. 1h. The method includes the following steps.

Step 1601. N laser radars search for a target.

For this step, refer to the descriptions in the foregoing step 1301. Details are not described herein again. It should be understood that "N laser radars search for a target" is that the N laser radars scan a detection region.

Step 1602. The N laser radars separately obtain point cloud data obtained by scanning the detection region, and send the point cloud data to a control apparatus. Correspondingly, the control apparatus receives the point cloud data from the N laser radars.

Step 1603. The control apparatus performs three-dimensional modeling based on the received point cloud data. Herein, because the N laser radars scan the entire detection region, the control apparatus may establish a three-dimensional model of the entire detection region. It should be understood that, if a laser beam transmitted by a laser radar is blocked, scanning may be performed by using a laser beam of another laser radar, so that the control apparatus can establish a precise three-dimensional model.

Step 1604. The control apparatus cooperates with the N laser radars, so that the N laser radars separately align with the target.

For step 1604, refer to the descriptions of the foregoing step 1302 to step 1307. Details are not described herein again. It should be noted that there is no sequence between step 1603 and step 1604. Step 1603 may be performed before step 1604, or step 1604 may be performed before step 1603.

Step 1605. A first laser radar communicates with the target.

Herein, if the method is applied to the scenario shown in FIG. 1b, FIG. 1c, FIG. 1d, FIG. 1g, or FIG. 1h, communication information includes but is not limited to graphics data. If the method is applied to the scenario shown in FIG. 1f or FIG. 1e, the first laser radar may send traveling direction information to the target (that is, communication information is the traveling direction information), or the first laser radar may send a high-precision map to the target (that is, communication information is the high-precision map). It should be understood that, if the method is applied to the scenario shown in FIG. 1f or FIG. 1e, when the N laser radar search for the target, the N laser radars may scan a road. Further, the N laser radars may separately upload data to the control apparatus, the control apparatus may transmit, to a map server, the data obtained through scanning, and the map server may cover a map with the information obtained by the laser radar through scanning, and deliver the map to the target.

Step 1606. A second laser radar tracks the target.

For related descriptions of step 1605 and step 1606, refer to the related descriptions in FIG. 13b and FIG. 13c. Details are not described herein again.

In a possible implementation, in a process of tracking the target, the second laser radar may scan only a region in which the target is located, to obtain a posture of the target; or may scan the entire detection region to update in a timely manner the three-dimensional model established in step 1603; or when there are a plurality of second laser radars, some second laser radars are configured to scan a region in which the target is located, and some second laser radars are configured to scan the entire detection region.

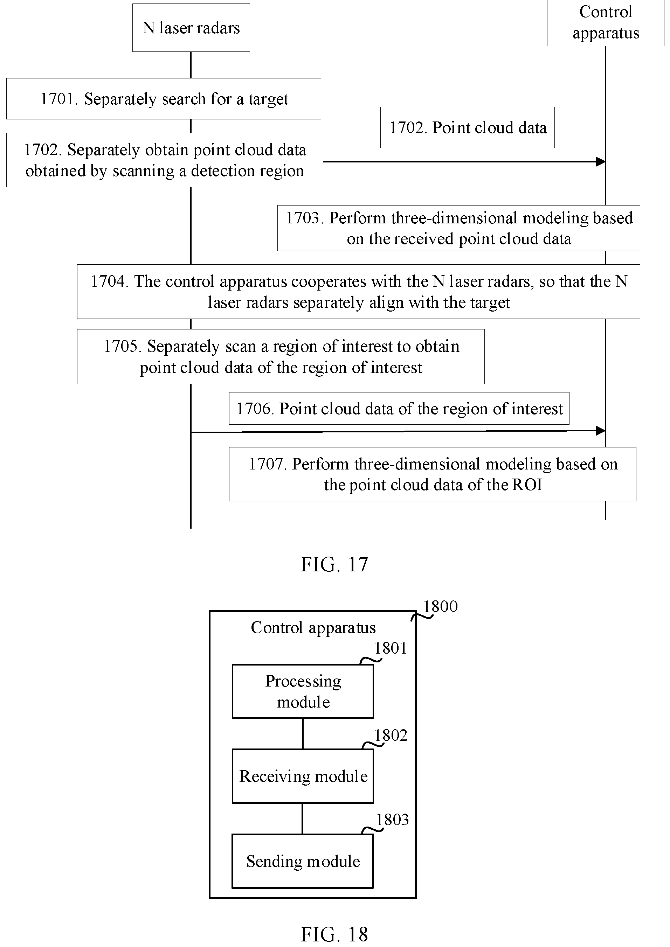

FIG. 17 is a schematic flowchart of still another detection method according to this application. The method may be applied to a facial recognition scenario, and a target in the scenario may be a person. The method includes the following steps.

Step 1701. N laser radars search for a target.

For this step, refer to the descriptions in the foregoing step 1301. Details are not described herein again.

Step 1702. The N laser radars separately obtain point cloud data obtained by scanning a detection region, and send the point cloud data to a control apparatus. Correspondingly, the control apparatus receives the point cloud data from the N laser radars.

Step 1703. The control apparatus performs three-dimensional modeling based on the received point cloud data.

For step 1703, refer to the descriptions of the foregoing step 1603. Details are not described herein again.

Step 1704. The control apparatus cooperates with the N laser radars, so that the N laser radars separately align with the target.

For step 1704, refer to the descriptions of the foregoing step 1604. Details are not described herein again.

Step 1705. The N laser radars separately scan a region of interest (ROI) to obtain point cloud data of the ROI. Herein, the ROI may be a face.

Step 1706. The N laser radars separately send the point cloud data of the ROI to the control apparatus. Correspondingly, the control apparatus may separately receive the point cloud data of the ROI from the N laser radars.

With reference to the foregoing FIG. 3a, 360-degree scanning may be implemented by using the N laser radars.

Step 1707. The control apparatus may perform three-dimensional modeling based on the point cloud data of the ROI from the N laser radars.

Herein, if the ROI is a face, the established model may be a three-dimensional face model.

Based on the foregoing step 1701 to step 1707, the N laser radars perform scanning to establish three-dimensional modeling, and precision of the established model is high, for example, a face model, so that facial recognition precision is high.

It may be understood that, to implement the functions in the foregoing embodiments, the control apparatus includes a corresponding hardware structure and/or software module for performing the functions. A person skilled in the art should be easily aware that, with reference to modules and method steps in the examples described in the embodiments disclosed in this application, this application can be implemented by hardware or a combination of hardware and computer software. Whether a function is performed by hardware or hardware driven by computer software depends on particular application scenarios and design constraint conditions of the technical solutions.

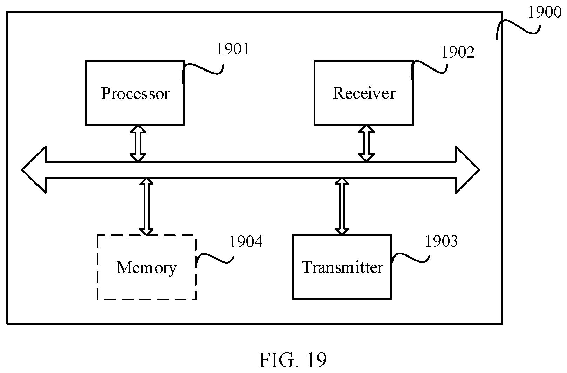

Based on the foregoing content and a same concept, FIG. 18 and FIG. 19 are schematic diagrams of a possible structure of a control apparatus according to this application. These control apparatuses may be configured to implement functions of the control apparatus in the foregoing method embodiments, and therefore can also implement beneficial effects of the foregoing method embodiments.

As shown in FIG. 18, a control apparatus 1800 includes a processing module 1801, a receiving module 1802, and a sending module 1803. The control apparatus 1800 is configured to implement functions of the control apparatus in the method embodiment shown in FIG. 15.

When the control apparatus 1800 is configured to implement the functions of the control apparatus in the method embodiment shown in FIG. 15, the receiving module 1802 is configured to receive first information from a laser radar that finds a target, where the first information indicates a first distance between the target and the laser radar that finds the target, the laser radar that finds the target is at least one laser radar in N laser radars, and N is an integer greater than 1; the processing module 1801 is configured to: determine, based on the first information, a region in which the target is located, and generate a first instruction based on the region in which the target is located; and the sending module 1803 is configured to send the first instruction to a laser radar that does not find the target, where the first instruction is used to instruct the laser radar that does not find the target to perform searching in the region in which the target is located, and the laser radar that does not find the target is a laser radar other than the laser radar that finds the target in the N laser radars.

For more detailed descriptions of the processing module 1801, the receiving module 1802, and the sending module 1803, directly refer to the related descriptions in the method embodiment shown in FIG. 15. Details are not described herein again.

It should be understood that the processing module 1801 in this embodiment of this application may be implemented by a processor or a processor-related circuit component, the receiving module 1802 may be implemented by a receiver or a receiver-related circuit component, and the sending module 1803 may be implemented by a transmitter or a transmitter-related circuit component.

Based on the foregoing content and a same concept, as shown in FIG. 17, this application further provides a control apparatus 1900. The control apparatus 1900 may include a processor 1901, a receiver 1902, and a transmitter 1903. The processor 1901, the receiver 1902, and the transmitter 1903 are coupled to each other. It may be understood that the receiver 1902 may be an interface circuit or an input/output interface, and the transmitter 1903 may also be an interface circuit or an input/output interface. Optionally, the control apparatus 1900 may further include a memory 1904, configured to store instructions executed by the processor 1901, or store input data required by the processor 1901 to run instructions, or store data generated after the processor 1901 runs instructions.

When the control apparatus 1900 is configured to implement the method shown in FIG. 15, the processor 1901 is configured to perform a function of the processing module 1801, the receiver 1902 is configured to perform a function of the receiving module 1802, and the transmitter 1903 is configured to perform a function of the sending module 1803.

It may be understood that, the processor in the embodiments of this application may be a central processing unit (CPU), or may be another general-purpose processor, a digital signal processor (DSP), an application-specific integrated circuit (ASIC), a field programmable gate array (FPGA) or another programmable logic device, a transistor logic device, a hardware component, or any combination thereof. The general purpose processor may be a microprocessor or any conventional processor.

The method steps in the embodiments of this application may be implemented in a hardware manner, or may be implemented in a manner of executing software instructions by the processor. The software instructions may include a corresponding software module. The software module may be stored in a random access memory (RAM), a flash memory, a read-only memory (ROM), a programmable read-only memory (PROM), an erasable programmable read-only memory (EPROM), an electrically erasable programmable read-only memory (EEPROM), a register, a hard disk, a removable hard disk, a CD-ROM, or any other form of storage medium well-known in the art. For example, a storage medium is coupled to a processor, so that the processor can read information from the storage medium, and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in a network device or a terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in the embodiments of this application are all or partially performed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium such as a floppy disk, a hard disk, or a magnetic tape, or may be an optical medium such as a digital video disc (DVD), or may be a semiconductor medium such as a solid state drive (SSD).

In the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "uniformity" does not mean absolute uniformity, "verticality" does not mean absolute verticality, and a specific engineering error may be allowed. "At least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between associated objects. In the formula of this application, the character "/" indicates a "division" relationship between associated objects. In addition, in this application, the word "example" is used to represent giving an example, an illustration, or a description. Any embodiment or design scheme described as an "example" in this application should not be explained as being more preferred or having more advantages than another embodiment or design scheme. Alternatively, it may be understood that the word "example" is used to present a concept in a specific manner, and does not constitute a limitation on this application.

It may be understood that various numbers in the embodiments of this application are merely used for differentiation for ease of description, and are not used to limit the scope of the embodiments of this application. Sequence numbers of the foregoing processes do not mean execution sequences. The execution sequences of the processes should be determined based on functions and internal logic of the processes. The terms "first", "second", and the like are used to distinguish between similar objects, but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are expressly listed, but may include other steps or units that are not expressly listed or that are inherent to such processes, methods, products, or devices.

## Claims

1. A detection and communication system, comprising:
N radars, configured to: separately search for a target, and separately align with the target, wherein N is an integer greater than 1; and
a first radar is configured to communicate with the target, a second radar is configured to track and point the target, the first radar is K radars that are in the N radars and that align with the target, the second radar is a radar other than the first radar in the N radars, and K is a positive integer less than N.

2. The system according to claim 1, wherein coverage regions of electromagnetic waves transmitted by the N radars overlap.

3. The system according to claim 1 or 2, wherein a radar that is in the N radars and that finds the target is configured to feed back first information to a control apparatus, and the first information indicates a first distance between the target and the radar that finds the target; and
a radar that is in the N radars and that does not find the target is configured to: receive a first instruction from the control apparatus, and perform, based on the first instruction, searching in a region in which the target is located.

4. The system according to claim 3, wherein if one radar finds the target, the first instruction is used to instruct the radar that does not find the target to perform searching on a spherical surface whose sphere center is the radar that finds the target and whose radius is the first distance.

5. The system according to claim 3, wherein N is an integer greater than 2, and if two radars find the target, the first instruction is used to instruct the radar that does not find the target to perform searching on a junction line of spherical surfaces corresponding to the two radars that find the target, wherein the spherical surface corresponding to the radar that finds the target is a spherical surface whose sphere center is the radar that finds the target and whose radius is the first distance.

6. The system according to claim 3, wherein N is an integer greater than 3, and if at least three radars find the target, the first instruction is used to instruct the radar that does not find the target to perform searching at an intersection point of spherical surfaces corresponding to the at least three radars that find the target, wherein the spherical surface corresponding to the radar that finds the target is a spherical surface whose sphere center is the radar that finds the target and whose radius is the first distance.

7. The system according to claim 1 or 2, wherein the N radars are separately configured to:
receive an echo signal reflected from a detection region;
determine, based on the received echo signal, point cloud data corresponding to the detection region; and
feed back third information to a control apparatus, wherein the third information comprises the corresponding point cloud data.

8. The system according to any one of claims 1 to 7, wherein each of the N radars corresponds to one feedback control component; and
the feedback control component is configured to:
receive fourth information from the radar that finds the target, wherein the fourth information indicates a location relationship between the target and a central region of an electromagnetic wave transmitted by the radar that finds the target; and
generate a control instruction based on the fourth information, wherein the control instruction is used to instruct the central region of the electromagnetic wave transmitted by the radar that finds the target to align with the target.

9. The system according to any one of claims 3 to 7 or according to claim 8 in its reference to claim 7, wherein the second radar is further configured to:
send second information to the control apparatus, wherein the second information indicates a location of the target after movement.

10. The system according to any one of claims 1 to 9, wherein the first radar is further configured to:
transmit a first electromagnetic wave to the target in a first time domain, wherein the first electromagnetic wave carries communication information; and
transmit a second electromagnetic wave to the target in a second time domain, wherein the second electromagnetic wave is used to determine a first distance between the first radar and the target; and
the second radar is further configured to:
transmit a third electromagnetic wave to the target, wherein the third electromagnetic wave is used to determine a first distance between the second radar and the target.

11. The system according to claim 10, wherein the first radar is further configured to:
encode communication information to obtain a communication code;
combine the communication code and a ranging code, and modulate the combined communication code and ranging code onto a to-be-transmitted electromagnetic wave to obtain a fourth electromagnetic wave; and
transmit the fourth electromagnetic wave to the target.

12. The system according to any one of claims 10 to 11, wherein the detection and communications system further comprises the target, and the target comprises a lens component, a reflection component, and a third detector, wherein
the lens component is configured to converge the received first electromagnetic wave to the third detector;
the third detector is configured to demodulate the received first electromagnetic wave to obtain the communication information; and
the reflection component is configured to: reflect the second electromagnetic wave to obtain a second echo signal, and reflect the third electromagnetic wave to obtain a third echo signal.

13. The system according to any one of claims 3 to 6 or any one of claims 8 to 12 in its reference to claim 3, wherein the detection and communication system further comprises the control apparatus, wherein
the control apparatus is configured to:
receive the first information from the radar that finds the target, wherein the first information indicates the first distance between the target and the radar that finds the target;
determine, based on the first information, the region in which the target is located; and
generate the first instruction based on the region in which the target is located, and send the first instruction to the radar that does not find the target.

## Patentansprüche

1. Detektions- und Kommunikationssystem, umfassend:
N Radargeräte, die konfiguriert sind, um: separat nach einem Ziel zu suchen und sich separat auf das Ziel auszurichten, wobei N eine Ganzzahl größer als 1 ist; und
ein erstes Radargerät konfiguriert ist, um mit dem Ziel zu kommunizieren, ein zweites Radargerät konfiguriert ist, um das Ziel zu verfolgen und anzuvisieren, das erste Radargeräte K Radargeräte sind, die in den N Radargeräten sind und die sich auf das Ziel ausrichteten, das zweite Radargerät ein anderes Radargerät als das erste Radargerät in den N Radargeräten ist und K eine positive Ganzzahl kleiner als N ist.

2. System nach Anspruch 1, wobei sich Abdeckungsbereiche der von den N Radargeräten übertragenen elektromagnetischen Wellen überlappen.

3. System nach Anspruch 1 oder 2, wobei ein Radargerät, das in den N Radargeräten ist und das Ziel findet, konfiguriert ist, um erste Informationen an eine Steuervorrichtung zurückzumelden, und die ersten Informationen eine erste Entfernung zwischen dem Ziel und dem Radargerät angeben, das das Ziel findet; und
ein Radargerät, das in den N Radargeräten ist und das Ziel nicht findet, konfiguriert ist, um: eine erste Anweisung von der Steuervorrichtung zu empfangen und basierend auf der ersten Anweisung eine Suche in einem Bereich durchzuführen, in dem sich das Ziel befindet.

4. System nach Anspruch 3, wobei, wenn ein Radargerät das Ziel findet, die erste Anweisung dazu verwendet wird, das Radargerät, das das Ziel nicht findet, anzuweisen, eine Suche auf einer Kugeloberfläche durchzuführen, deren Kugelmittelpunkt das Radargerät ist, das das Ziel findet, und deren Radius die erste Entfernung ist.

5. System nach Anspruch 3, wobei N eine Ganzzahl größer als 2 ist und, wenn zwei Radargeräte das Ziel finden, die erste Anweisung verwendet wird, um das Radargerät, das das Ziel nicht findet, anzuweisen, eine Suche auf einer Verbindungslinie von Kugeloberflächen durchzuführen, die den zwei Radargeräten entsprechen, die das Ziel finden, wobei die Kugeloberfläche, die dem Radargerät entspricht, das das Ziel findet, eine Kugeloberfläche ist, deren Kugelmittelpunkt das Radargerät ist, das das Ziel findet, und deren Radius die erste Entfernung ist.

6. System nach Anspruch 3, wobei N eine Ganzzahl größer als 3 ist und, wenn mindestens drei Radargeräte das Ziel finden, die erste Anweisung verwendet wird, um das Radargerät, das das Ziel nicht findet, anzuweisen, eine Suche an einem Schnittpunkt von Kugeloberflächen durchzuführen, die den mindestens drei Radargeräten entsprechen, die das Ziel finden, wobei die Kugeloberfläche, die dem Radargerät entspricht, das das Ziel findet, eine Kugeloberfläche ist, deren Kugelmittelpunkt das Radargerät ist, das das Ziel findet, und deren Radius die erste Entfernung ist.

7. System nach Anspruch 1 oder 2, wobei die N Radargeräte separat konfiguriert sind, um:
ein Echosignal zu empfangen, das von einem Detektionsbereich reflektiert wird;
basierend auf dem empfangenen Echosignal Punktwolkendaten zu bestimmen, die dem Detektionsbereich entsprechen; und
dritte Informationen an eine Steuervorrichtung zurückzumelden, wobei die dritten Informationen die entsprechenden Punktwolkendaten umfassen.

8. System nach einem der Ansprüche 1 bis 7, wobei jedes der N Radargeräte einer Rückkopplungssteuerkomponente entspricht; und die Rückkopplungssteuerkomponente ist konfiguriert, um:
vierte Informationen von dem Radargerät zu empfangen, das das Ziel findet, wobei die vierten Informationen eine Ortsbeziehung zwischen dem Ziel und einem zentralen Bereich einer elektromagnetischen Welle angeben, die von dem Radargerät übertragen wird, das das Ziel findet; und
eine Steueranweisung basierend auf den vierten Informationen zu erzeugen, wobei die Steueranweisung verwendet wird, um den zentralen Bereich der elektromagnetischen Welle, die von dem Radargerät übertragen wird, das das Ziel findet, anzuweisen, sich auf das Ziel auszurichten.

9. System nach einem der Ansprüche 3 bis 7 oder nach Anspruch 8 in Bezugnahme auf Anspruch 7, wobei das zweite Radargerät ferner konfiguriert ist, um:
zweite Informationen an die Steuervorrichtung zu senden, wobei die zweiten Informationen einen Standort des Ziels nach einer Bewegung angeben.

10. System nach einem der Ansprüche 1 bis 9, wobei das erste Radargerät ferner konfiguriert ist, um:
eine erste elektromagnetische Welle in einem ersten Zeitbereich an das Ziel zu übertragen, wobei die erste elektromagnetische Welle Kommunikationsinformationen trägt; und
eine zweite elektromagnetische Welle in einem zweiten Zeitbereich an das Ziel zu übertragen, wobei die zweite elektromagnetische Welle verwendet wird, um eine erste Entfernung zwischen dem ersten Radargerät und dem Ziel zu bestimmen; und
das zweite Radargerät außerdem konfiguriert ist, um:
eine dritte elektromagnetische Welle an das Ziel zu übertragen, wobei die dritte elektromagnetische Welle verwendet wird, um eine erste Entfernung zwischen dem zweiten Radargerät und dem Ziel zu bestimmen.

11. System nach Anspruch 10, wobei die Steuerung ferner konfiguriert ist, um:
Kommunikationsinformationen zu verschlüsseln, um einen Kommunikationscode zu erlangen;
den Kommunikationscode und einen Entfernungscode zu kombinieren und den kombinierten Kommunikationscode und Entfernungscode auf eine zu übertragende elektromagnetische Welle zu modulieren, um eine vierte elektromagnetische Welle zu erlangen; und
die vierte elektromagnetische Welle an das Ziel zu übertragen.

12. System nach einem der Ansprüche 10 bis 11, wobei das Detektions- und Kommunikationssystem ferner das Ziel umfasst und das Ziel eine Linsenkomponente, eine Reflexionskomponente und einen dritten Detektor umfasst, wobei
die Linsenkomponente konfiguriert ist, um die empfangene erste elektromagnetische Welle zu dem dritten Detektor zu konvergieren;
der dritte Detektor konfiguriert ist, um die empfangene erste elektromagnetische Welle zu demodulieren, um die Kommunikationsinformationen zu erlangen; und
die Reflexionskomponente konfiguriert ist, um: die zweite elektromagnetische Welle zu reflektieren, um ein zweites Echosignal zu erlangen, und die dritte elektromagnetische Welle zu reflektieren, um ein drittes Echosignal zu erlangen.

13. System nach einem der Ansprüche 3 bis 6 oder einem der Ansprüche 8 bis 12 in Bezugnahme auf Anspruch 3, wobei das Detektions- und Kommunikationssystem ferner die Steuervorrichtung umfasst, wobei
die Steuervorrichtung konfiguriert ist, um:
die ersten Informationen von dem Radargerät zu empfangen, das das Ziel findet, wobei die ersten Informationen die erste Entfernung zwischen dem Ziel und dem Radargerät angeben, das das Ziel findet;
basierend auf den ersten Informationen den Bereich zu bestimmen, in dem sich das Ziel befindet; und
die erste Anweisung basierend auf dem Bereich zu erzeugen, in dem sich das Ziel befindet, und die erste Anweisung an das Radargerät zu senden, das das Ziel nicht findet.

## Revendications

1. Système de détection et de communication, comprenant :
N radars, configurés pour : rechercher séparément une cible et s'aligner séparément sur la cible, dans lequel N est un entier supérieur à 1 ; et
un premier radar est configuré pour communiquer avec la cible, un second radar est configuré pour suivre et pointer la cible, le premier radar est constitué de K radars qui sont dans les N radars et qui s'alignent avec la cible, le second radar est un radar autre que le premier radar dans les N radars, et K est un entier positif inférieur à N.

2. Système selon la revendication 1, dans lequel les régions de couverture des ondes électromagnétiques transmises par les N radars se chevauchent.

3. Système selon la revendication 1 ou 2, dans lequel un radar parmi les N radars qui détecte la cible est configuré pour renvoyer les premières informations à un appareil de commande, et les premières informations indiquent une première distance entre la cible et le radar qui la détecte ; et
un radar qui est dans les N radars et qui ne trouve pas la cible est configuré pour : recevoir une première instruction de l'appareil de commande, et réaliser, sur la base de la première instruction, une recherche dans une région dans laquelle se trouve la cible.

4. Système selon la revendication 3, dans lequel si un radar trouve la cible, la première instruction est utilisée pour ordonner au radar qui ne trouve pas la cible de réaliser une recherche sur une surface sphérique dont le centre de sphère est le radar qui trouve la cible et dont le rayon est la première distance.

5. Système selon la revendication 3, dans lequel N est un entier supérieur à 2, et si deux radars trouvent la cible, la première instruction est utilisée pour ordonner au radar qui ne trouve pas la cible de réaliser une recherche sur une ligne de jonction de surfaces sphériques correspondant aux deux radars qui trouvent la cible, dans lequel la surface sphérique correspondant au radar qui trouve la cible est une surface sphérique dont le centre de sphère est le radar qui trouve la cible et dont le rayon est la première distance.

6. Système selon la revendication 3, dans lequel N est un entier supérieur à 3, et si au moins trois radars trouvent la cible, la première instruction est utilisée pour ordonner au radar qui ne trouve pas la cible de réaliser une recherche à un point d'intersection de surfaces sphériques correspondant aux au moins trois radars qui trouvent la cible, dans lequel la surface sphérique correspondant au radar qui trouve la cible est une surface sphérique dont le centre de sphère est le radar qui trouve la cible et dont le rayon est la première distance.

7. Système selon la revendication 1 ou 2, dans lequel les N radars sont configurés séparément pour :
recevoir un signal d'écho réfléchi par une région de détection ;
déterminer, sur la base du signal d'écho reçu, les données de nuage de points correspondant à la région de détection ; et
renvoyer des troisièmes informations à un appareil de commande, dans lequel les troisièmes informations comprennent les données de nuage de points correspondantes.

8. Système selon l'une quelconque des revendications 1 à 7, dans lequel chacun des N radars correspond à un composant de commande par rétroaction ; et
le composant de commande de rétroaction est configuré pour :
recevoir les quatrièmes informations du radar qui trouve la cible, dans lequel les quatrièmes informations indiquent une relation de localisation entre la cible et une région centrale d'une onde électromagnétique transmise par le radar qui trouve la cible ; et
générer une instruction de commande basée sur les quatrièmes informations, dans lequel l'instruction de commande est utilisée pour ordonner à la région centrale de l'onde électromagnétique transmise par le radar qui trouve la cible de s'aligner avec la cible.

9. Système selon l'une quelconque des revendications 3 à 7 ou selon la revendication 8 en référence à la revendication 7, dans lequel le second radar est également configuré pour :
envoyer des deuxièmes informations à l'appareil de commande, dans lequel les deuxièmes informations indiquent l'emplacement de la cible après le mouvement.

10. Système selon l'une quelconque des revendications 1 à 9, dans lequel le premier radar est également configuré pour :
transmettre une première onde électromagnétique à la cible dans un premier domaine temporel, dans lequel la première onde électromagnétique transporte des informations de communication ; et
transmettre une deuxième onde électromagnétique à la cible dans un second domaine temporel, dans lequel la deuxième onde électromagnétique est utilisée pour déterminer une première distance entre le premier radar et la cible ; et
le second radar est également configuré pour :
transmettre une troisième onde électromagnétique à la cible, dans lequel la troisième onde électromagnétique est utilisée pour déterminer une première distance entre le second radar et la cible.

11. Système selon la revendication 10, dans lequel le premier radar est également configuré pour :
coder les informations de communication pour obtenir un code de communication ;
combiner le code de communication et un code de télémétrie, et moduler le code de communication et le code de télémétrie combinés sur une onde électromagnétique à transmettre pour obtenir une quatrième onde électromagnétique ; et
transmettre la quatrième onde électromagnétique à la cible.

12. Système selon l'une quelconque des revendications 10 à 11, dans lequel le système de détection et de communication comprend également la cible, et la cible comprend un composant de lentille, un composant de réflexion et un troisième détecteur, dans lequel
le composant de lentille est configuré pour faire converger la première onde électromagnétique reçue vers le troisième détecteur ;
le troisième détecteur est configuré pour démoduler la première onde électromagnétique reçue afin d'obtenir les informations de communication ; et
le composant de réflexion est configuré pour : réfléchir la deuxième onde électromagnétique pour obtenir un deuxième signal d'écho, et réfléchir la troisième onde électromagnétique pour obtenir un troisième signal d'écho.

13. Système selon l'une quelconque des revendications 3 à 6 ou l'une quelconque des revendications 8 à 12 en référence à la revendication 3, dans lequel le système de détection et de communication comprend également l'appareil de commande, dans lequel
l'appareil de commande est configuré pour :
recevoir les premières informations du radar qui trouve la cible, dans lequel les premières informations indiquent la première distance entre la cible et le radar qui trouve la cible ;
déterminer, sur la base des premières informations, la région dans laquelle se trouve la cible ; et
générer la première instruction sur la base de la région dans laquelle se trouve la cible et envoyer la première instruction au radar qui ne trouve pas la cible.
